(19) Europäisches Patentamt / European Patent Office / Office européen des brevets

(11) **EP 4 053 817 B1**

(12) **EUROPEAN PATENT SPECIFICATION**

(45) Date of publication and mention
of the grant of the patent:
**16.07.2025 Bulletin 2025/29**

(21) Application number: **20880461.7**

(22) Date of filing: **28.10.2020**

(51) International Patent Classification (IPC):
**G01D 21/02** (2006.01)    **G08G 1/09** (2006.01)
**G08G 1/16** (2006.01)    **G05D 23/19** (2006.01)
**B60L 15/20** (2006.01)    **B60L 50/60** (2019.01)
**G05D 1/00** (2024.01)

(52) Cooperative Patent Classification (CPC):
**G01D 21/02; B60L 15/20; B60L 50/60;**
**G05D 1/0274; G05D 1/0282; G05D 23/1905;**
B60L 2240/62; B60L 2260/32; G08G 1/16;
Y02T 10/72

(86) International application number:
**PCT/JP2020/040505**

(87) International publication number:
**WO 2021/085498 (06.05.2021 Gazette 2021/18)**

(54) **MOBILE BODY CONTROL SYSTEM**

MOBILES KÖRPERSTEUERUNGSSYSTEM

SYSTÈME DE COMMANDE DE CORPS MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2019 CN 201911048014**

(43) Date of publication of application:
**07.09.2022 Bulletin 2022/36**

(73) Proprietor: **Daikin Industries, Ltd.
Osaka-shi, Osaka 530-0001 (JP)**

(72) Inventor: **GAN, Quan
Shanghai, 201108 (CN)**

(74) Representative: **Global IP Europe
Patentanwaltskanzlei
Pfarrstraße 14
80538 München (DE)**

(56) References cited:
**EP-A1- 3 611 708    WO-A1-2018/220903
WO-A1-2018/220903    JP-A- 2016 217 583
JP-A- 2019 021 220    US-A1- 2019 091 874**

**Description**

Technical Field

The present invention relates to a technical field of electronic information.

Background Art

An indoor environment adjustment system is capable of adjusting an indoor environment. Restrictions on the setting position and adjustment ability of the indoor environment adjustment system do not result in an even distribution of an environment parameter in different regions in a room.

PTL 1 (WO2018/220903A1) discloses a moving body control system. When a user is sitting on a moving body, the moving body is capable of detecting a physiological parameter of the user. Accordingly, the moving body determines whether the user feels comfortable in an environment of a region where the user is currently located. In response to determining that the user does not feel comfortable, the moving body moves to another region in a room where the user feels comfortable. For example, in response to determining that the user feels that the temperature of the region where the user is located is high, the moving body moves to a low-temperature region in the room.

Note that the foregoing technical background is introduced merely to facilitate the understanding by those skilled in the art for the sake of convenience of clearer and complete description of a technical proposal of the present invention. It should not be certified, only by those schemes being described in the part of the background art of the present invention, that the above-described technical schemes are known to those skilled in the art.

In PTL 1, an environment sensor fixedly located, for example, a temperature sensor and/or a humidity sensor or the like, is provided in a room. The environment sensor is capable of obtaining an environment parameter in a surrounding region. Accordingly, when a moving body needs to move, a target movement region can be specified on the basis of the environment parameter obtained by the fixedly located environment sensor.

US 2019/091874 A1 discloses a moving body control system comprising: a moving body; a fixed environment sensor capable of obtaining first environment detection data in a fixed region in a predetermined space, the first environment detection data including detection data of at least one of humidity, temperature, illuminance, wind velocity, noise, and scent; a moving environment sensor capable of obtaining second environment detection data in a region in which the moving environment sensor moves, the second environment detection data including detection data of at least one of humidity, temperature, illuminance, wind velocity, noise, and scent; and a server configured to control a movement of the moving body (1) on the basis of the first environment detection data and the second environment detection data.

Summary of Invention

Technical Problem

The inventors of the present application have found the following in PTL 1. With use of an environment parameter obtained by a fixedly located environment sensor, only an environment state in a limited surrounding region can be accurately reflected, but an environment state in a remote region can not accurately be reflected. Thus, the environment parameter obtained by the environment sensor is not accurate, and there is a possibility that a moving body specifies an inappropriate target movement region on the basis of the environment parameter obtained by the fixedly located environment sensor. For example, in a certain region far from each of a plurality of sensors, an actual temperature is 30°C whereas a detection result of the environment sensor closest to the region is 26°C. The moving body sets the region as a target movement region on the basis of the detection result of 26°C. However, the region has an actual temperature of 30°C and is not an appropriate target movement region.

Solution to Problem

The problem above is solved by the moving body control system defined by the appended claim 1. In other words, there is provided a moving body control system that includes a moving environment sensor whose position is movable, that is capable of accurately obtaining parameter information in an environment as a result of environment detection data of the moving environment sensor and environment detection data of a fixed environment sensor supplementing each other, and that is further capable of more accurately specifying a target movement region of a moving body. there is provided a moving body control system including a moving body, a fixed environment sensor capable of obtaining first environment detection data in a fixed region in an environment, a moving environment sensor capable of obtaining second environment detection data in a region in which the moving environment sensor moves, and an environment matching server that controls a movement of the moving body on the basis of the first environment detection data and the second environment detection data. The first environment detection data and the second environment detection data include detection data of at least one of humidity, temperature, illuminance, wind velocity, noise, and scent.

As a modification of the above-mentioned reference example, the moving body is capable of obtaining environment preference information reflecting an environment condition requested by a person or an object mounted on the moving body, and the environment matching server specifies, on the basis of the environment preference information obtained by the moving body, by using the first environment detection data and the second environment detection data, a region that matches the environment preference information as a movement target region of the moving body. the environment matching server creates an environment information map on the basis of the first environment detection data and the second environment detection data, and the environment matching server creates, for a region other than the fixed region in the predetermined space, the environment information map by using second environment detection data obtained in the region by the moving environment sensor. in response to the moving environment sensor obtaining the second environment detection data in the fixed region in the predetermined space, the second environment detection data is used for the fixed region instead of the first environment detection data in the fixed region.

As further another modification of the above-mentioned reference example, the moving environment sensor is provided separately from the moving body, and a movement route of the moving environment sensor and a movement route of the moving body are independent of each other.

As further another modification of the above-mentioned reference example, the moving environment sensor is provided in or on the moving body.

As further another modification of the above-mentioned reference example, a movement route of the moving body provided with the moving environment sensor and a movement route of the moving environment sensor provided separately from the moving body do not overlap each other.

As further another modification of the above-mentioned reference example, at least one of the environment matching server, the moving body, and an environment adjustment system controls a movement position of the moving environment sensor, or the moving environment sensor moves along a predetermined route.

With reference to the description given below and the drawings, a special embodiment of the present invention will be disclosed in detail, and it is indicated that the principle of the present invention is used. It is to be understood that an embodiment of the present invention is not limited thereto in terms of scope. Within the scope of the attached claims, an embodiment of the present invention includes many changes, modifications, and equivalents.

A feature described and/or indicated in one embodiment may be used in one or more other embodiments in the same or similar manner, may be combined with a feature of another embodiment, or may replace a feature of another embodiment.

It is to be emphasized that "comprise/include" as a technical term is used in sentences to indicate the existence of a feature, an osteopathic member, a step, or a member, and does not eliminate the presence or addition of one or more other features, osteopathic members, steps, or members.

The attached drawings are provided for further understanding of the present invention, constitute part of the specification, exemplify a preferred embodiment of the present invention, and describe the principle of the present invention together with text. The attached drawings described below merely illustrate some examples of the present invention. It is apparent for those skilled in the art that other attached drawings can be obtained on the basis of the attached drawings under the assumption that originality or ingenuity is not exerted.

Brief Description of the Drawings

[Fig. 1A] Fig. 1A is a compositional schematic diagram of individual parts of a moving body control system according to a first aspect of an example of the present disclosure.

[Fig. 1B] Fig. 1B is a side view of an indoor space in which the moving body control system according to the first aspect of the example of the present disclosure is located.

[Fig. 2] Fig. 2 is a top view of Fig. 1B.

[Fig. 3] Fig. 3 is another top view of Fig. 1B.

[Fig. 4] Fig. 4 is a schematic diagram of a movement position of a moving environment sensor.

[Fig. 5] Fig. 5 is a schematic diagram of a movement position of the moving environment sensor.

[Fig. 6] Fig. 6 is a schematic diagram of a control method for the moving body control system according to the first aspect of the example of the present disclosure.

[Fig. 7] Fig. 7 is a schematic diagram of a plurality of second regions according to a second aspect of the example of the present disclosure.

[Fig. 8] Fig. 8 is another schematic diagram of a plurality of second regions according to the second aspect of the example of the present disclosure.

[Fig. 9] Fig. 9 is another schematic diagram of a plurality of second regions according to the second aspect of the example of the present disclosure.

[Fig. 10] Fig. 10 is another schematic diagram of a plurality of second regions according to the second aspect of the example of the present disclosure.

[Fig. 11] Fig. 11 is another schematic diagram of a plurality of second regions according to the second aspect of the example of the present disclosure.

[Fig. 12] Fig. 12 is another schematic diagram of a plurality of second regions according to the second aspect of the example of the present disclosure.

[Fig. 13] Fig. 13 is a schematic diagram of control of a moving body by the moving body control system according to the second aspect of the example of the present disclosure.

[Fig. 14] Fig. 14 illustrates an example of an operation time axis of an environment matching server.

[Fig. 15] Fig. 15 is a schematic diagram of target movement regions of individual moving bodies specified by the environment matching server on the basis of environment preference information of the individual moving bodies.

[Fig. 16] Fig. 16 is a schematic diagram of a method of specifying a target movement region of each moving body in a group in a third aspect of the example of the present disclosure.

[Fig. 17] Fig. 17 is a schematic diagram of target movement regions of individual moving bodies specified by the environment matching server on the basis of an evaluation function of a group.

[Fig. 18] Fig. 18 is another schematic diagram of target movement regions of individual moving bodies specified by the environment matching server on the basis of an evaluation function of a group.

[Fig. 19] Fig. 19 is another schematic diagram of a method of specifying a target movement region of each moving body in a group in the third aspect of the example of the present disclosure.

[Fig. 20] Fig. 20 is a schematic diagram of a target movement region of a moving body B specified by the environment matching server on the basis of operation 191.

[Fig. 21] Fig. 21 is a schematic diagram of a target movement region of a moving body A specified by the environment matching server on the basis of operation 191.

[Fig. 22] Fig. 22 is a schematic diagram of a method of implementing operation 192.

[Fig. 23] Fig. 23 is a schematic diagram of target movement regions of individual moving bodies finally specified after operation 192.

[Fig. 24] Fig. 24 is a schematic diagram of one specific embodiment of a method of specifying a target movement region of each moving body in a group based on Fig. 19.

Description of Embodiments

With reference to the drawings, the following description will make the above-described and other features of the present disclosure clearer. In the description and the drawings, a specific embodiment of the present disclosure is specifically disclosed, and part of an embodiment capable of adopting the principle of the present disclosure is illustrated. Note that the present disclosure is not limited to the embodiment that is described. On the contrary, the present disclosure includes all modifications, changes, and equivalents belonging to the attached claims.

In an example of the present disclosure, the terms "first", "second", and the like are used to distinguish different elements in the names, but do not indicate the spatial arrangement or temporal order of these elements. These elements are not limited by these terms. The term "and/or" includes one or plural of terms given in relation with each other, or all combinations of the terms.

In an example of the present disclosure, "a", "an", "the", and the like indicating a singular form include a plural form, should be broadly understood as "one type" or "one kind", and are not limited to the meaning of "one". The term "the" should be understood as including a singular form and a plural form except for the case in which an explanation is separately given in a preceding or subsequent sentence. The term "by" should be understood as "at least partially by" except for the case in which an explanation is separately given in a preceding or subsequent sentence. The term "based on" should be understood as "at least partially based on" except for the case in which an explanation is separately given in a preceding or subsequent sentence.

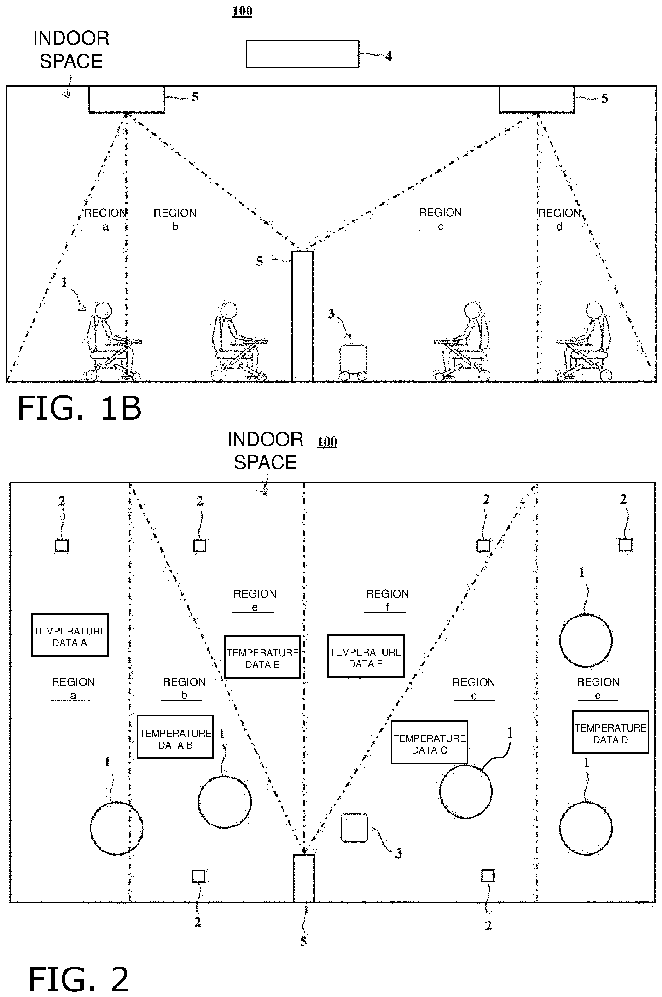

In individual examples of the present disclosure, a predetermined space may be one space having an area and a height that are relatively fixed. In the present application, a description will be given of an example in which the predetermined space is the indoor space illustrated in Fig. 1B and Fig. 2. The predetermined space is not limited to the indoor space.

<First aspect of example>

A first aspect of an example of the present disclosure provides a moving body control system.

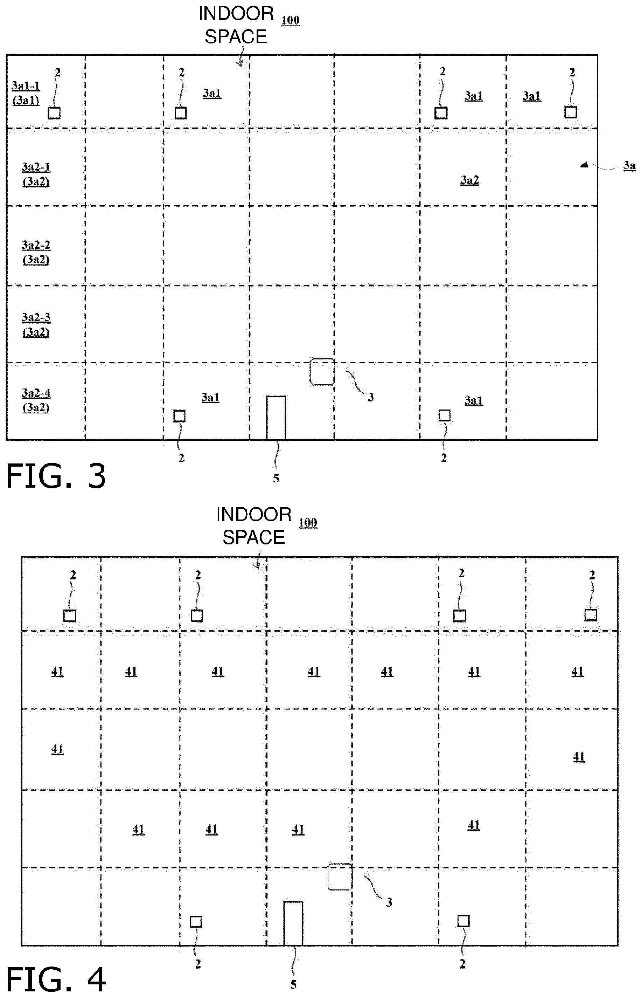

Fig. 1B is a side view of an indoor space in which the moving body control system according to the first aspect of the example of the present disclosure is located. Fig. 2 is a top view of Fig. 1B. Fig. 3 is another top view of Fig. 1B. As illustrated in Fig. 1B and Fig. 2, a moving body control system 100 includes a moving body 1, a fixed environment sensor 2 (illustrated in Fig. 2), a moving environment sensor 3, and an environment matching server 4 (illustrated in Fig. 1B). The moving body 1, the fixed environment sensor 2, and the moving environment sensor 3 may be provided in an indoor space. The environment matching server 4 may be provided in the indoor space or outside the indoor space. In addition, an environment adjustment system 5 may be provided in the indoor space. The environment adjustment system 5 may be an apparatus that adjusts an environment parameter, for example, at least one of a fan, an air conditioner, a humidifier, a dehumidifier, an aromatic spray, a ventilator, an air purifier, and the like.

In at least one example, the moving body 1 is movable, for example, a person or an object can be mounted on the moving body 1, and a movement of the moving body 1 causes the person or the object mounted thereon to move to a target movement position.

The fixed environment sensor 2 is fixedly located and is capable of obtaining first environment detection data in a fixed region in the predetermined space. The first environment detection data includes detection data of at least one of humidity, temperature, illuminance, wind velocity, noise, and scent.

The moving environment sensor 3 is movable and is capable of obtaining second environment detection data in a surrounding region. The second environment detection data includes detection data of at least one of humidity, temperature, illuminance, wind velocity, noise, and scent. The second environment detection data and the first environment detection data may be the same, or may be different at least partially.

The environment matching server 4 is capable of controlling a movement of the moving body 1 on the basis of the first environment detection data and the second environment detection data.

According to the first aspect of the example of the present application, a moving body control system includes a moving environment sensor whose position is movable, is capable of accurately obtaining parameter information in an environment as a result of environment detection data of the moving environment sensor and environment detection data of a fixed environment sensor supplementing each other, and is further capable of more accurately specifying a target movement region of a moving body by an environment matching server.

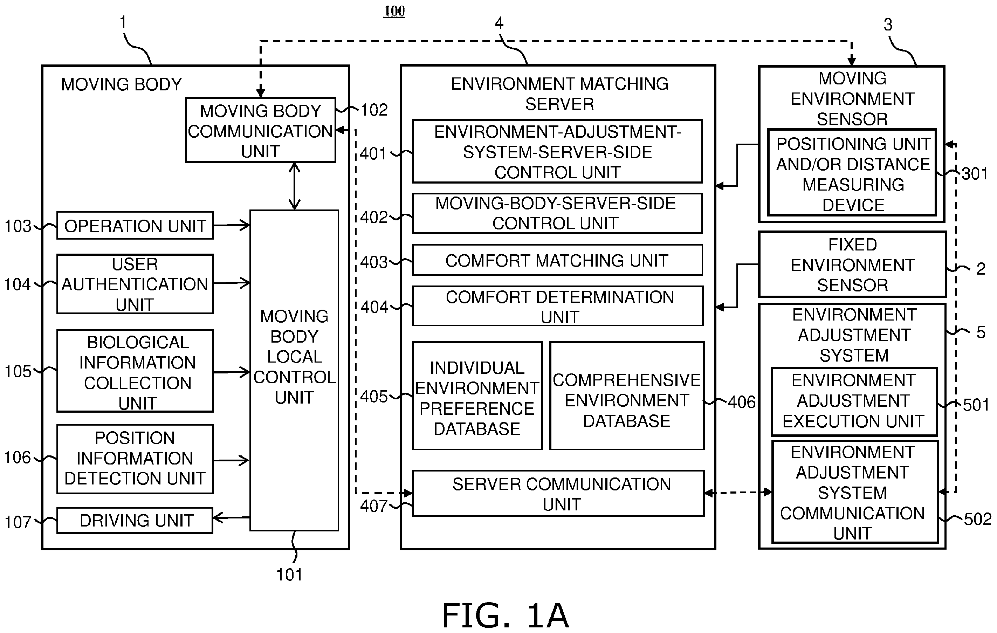

Fig. 1A is a compositional schematic diagram of individual parts of the moving body control system according to the first aspect of the example of the present disclosure.

As illustrated in Fig. 1A, the moving body 1 may include a moving body local control unit 101, a moving body communication unit 102, an operation unit 103, a user authentication unit 104, a biological information collection unit 105, a position information detection unit 106, and a driving unit 107.

Here, the moving body local control unit 101 controls the moving body 1 and outputs a control signal to the driving unit 107. The moving body communication unit 102 communicates with the environment matching server 4 and the moving environment sensor 3. The operation unit 103 receives an operation from a user, for example, an acceleration operation, a deceleration operation, an operation of inputting environment preference information, or the like. The user authentication unit 104 authenticates identification of a user. The biological information collection unit 105 collects biological information of a user, for example, biological information such as a body temperature and a heartbeat of a user. The position information detection unit 106 detects the position of the moving body 1. The driving unit 107 receives a control signal from the moving body local control unit 101, and drives the moving body 1 to move the moving body 1.

The moving body 1 does not necessarily include all the components illustrated in Fig. 1A. The moving body 1 may include a component that is not illustrated in Fig. 1A, so as to implement the corresponding function.

As illustrated in Fig. 1A, the fixed environment sensor 2 is fixedly located, and is capable of detecting an environment and obtaining first environment detection data.

As illustrated in Fig. 1A, the moving environment sensor 3 is movable and includes an environment sensing unit (not illustrated), a moving sensor driving unit (not illustrated), and a positioning unit and/or distance measuring device 301. Here, the environment sensing unit is capable of detecting an environment and obtaining second environment detection data. The moving sensor driving unit is capable of driving the moving environment sensor 3 so as to move the moving environment sensor 3. The positioning unit and/or distance measuring device 301 specifies the position of the moving environment sensor 3 and/or specifies the distance to another object, thereby being capable of ensuring a safe distance to the other object.

As illustrated in Fig. 1A, the environment matching server 4 includes an environment-adjustment-system-server-side control unit 401, a moving-body-server-side control unit 402, a comfort matching unit 403, a comfort determination unit 404, an individual environment preference database 405, a comprehensive environment database 406, and a server communication unit 407.

Here, the environment-adjustment-system-server-side control unit 401 controls the environment adjustment system 5. The moving-body-server-side control unit 402 controls the moving environment sensor 3 and, for example, specifies a movement target position or the like of the moving environment sensor 3. The comfort matching unit 403 determines whether first environment detection data or second environment detection data of individual regions matches environment preference information. The comfort determination unit 404 determines, on the basis of biological information of a user collected by the biological information collection unit 105 of the moving body 1, whether the user feels comfortable. The individual environment preference database 405 stores environment preference information. The comprehensive environment database 406 stores first environment detection data obtained and transmitted by the fixed environment sensor 2 and second environment detection data obtained and transmitted by the moving environment sensor 3. The server communication unit 407 communicates.

As illustrated in Fig. 1A, the environment adjustment system 5 includes an environment adjustment execution unit 501 and an environment adjustment system communication unit 502. Here, the environment adjustment execution unit 501 is capable of adjusting an environment and is, for example, capable of performing a process of cooling, heating, or the like. The environment adjustment system communication unit 502 communicates with the environment matching server 4 and the moving environment sensor 3. For example, the environment adjustment system communication unit 502 is capable of transmitting an instruction of a movement position to the moving environment sensor 3, and/or the environment adjustment system communication unit 502 is capable of feeding back operation state information of the environment adjustment system 5 to the environment matching server 4.

As illustrated in Fig. 2, the indoor space may be divided into, for example, six regions of a region a, a region b, a region c, a region d, a region e, and a region f, and each region may be provided with at least one fixed environment sensor 2. The environment matching server 4 is capable of generating an environment information map by associating the ranges of the individual regions a to f with first environment detection data obtained by the fixed environment sensors 2 in the individual regions. The environment information map reflects distribution information of environment information in a predetermined space (for example, the indoor space). For example, in Fig. 2, in a case where the first environment detection data is temperature data, temperature data A, temperature data B, temperature data C, temperature data D, temperature data E, and temperature data F are associated with the individual regions a to f, respectively.

In at least one example, the environment information map can be stored in the form of a table. In addition, the environment information map can be displayed on a display device connected to the environment matching server 4 in the form of a table or a figure.

The division into regions in Fig. 2 is merely an example, and the present application is not limited thereto.

As illustrated in Fig. 3, when the environment matching server 4 generates an environment information map by using the first environment detection data obtained by the fixed environment sensor 2 and the second environment detection data obtained by the moving environment sensor 3, the indoor space can be divided into more than the six regions illustrated in Fig. 2. For example, the indoor space may be divided into thirty-five regions 3a as indicated by a broken-line grid in Fig. 3. The division into regions in Fig. 3 is merely an example, and the present application is not limited thereto.

As illustrated in Fig. 3, among the thirty-five regions 3a, regions 3a1 are each provided with the fixed environment sensor 2 whereas the other regions 3a2 are not provided with the fixed environment sensor 2. Here, the region 3a1 may be referred to as a fixed region. The moving environment sensor 3 moves to the region 3a2 and detects the environment of the region 3a2, thereby being capable of obtaining second environment detection data of the region 3a2.

In at least one example, the environment matching server 4 is capable of generating an environment information map by associating the regions 3a with the first environment detection data obtained by the fixed environment sensors 2 in the regions 3a and/or the second environment detection data obtained by the moving environment sensor 3.

In the present application, the movement range of the moving environment sensor 3 is large, and information on more regions in the indoor space can be obtained. Thus, the indoor space can be more finely divided into a plurality of regions, the correspondence between environment detection data and the regions is more accurate, and thus a more accurate environment information map can be obtained.

In at least one example, while the environment matching server 4 is generating an environment information map on the basis of first environment detection data and second environment detection data, the environment matching server 4 is capable of generating the environment information map for the regions (for example, the regions 3a2) other than the fixed regions (for example, the regions 3a1) in an environment, by using the second environment detection data obtained in the regions 3a2 by the moving environment sensor 3.

For example, in Fig. 2, the region a is provided with the fixed environment sensor 2. If an environment information map is generated on the basis of only first environment detection data, the region a is associated with the first environment detection data of the fixed environment sensor 2. On the other hand, in Fig. 3, a region 3a1-1 is provided with the fixed environment sensor 2. The moving environment sensor 3 is capable of moving to a region 3a2-1, a region 3a2-2, a region 3a2-3, and a region 3a2-4 and obtaining the second environment detection data of the individual regions. If an environment information map is generated on the basis of the first environment detection data and the second environment detection data, the region 3a1-1 is associated with the first environment detection data, and the region 3a2-1, the region 3a2-2, the region 3a2-3, and the region 3a2-4 are associated with the second environment detection data of the individual regions. The sum of the areas of the region 3a1-1, the region 3a2-1, the region 3a2-2, the region 3a2-3, and the region 3a2-4 in Fig. 3 is approximate to the area of the region a in Fig. 2, but the environment information map formed on the basis of Fig. 3 is more accurate.

In at least one example, while the environment matching server 4 is generating an environment information map on the basis of first environment detection data and second environment detection data, the environment matching server 4 is capable of using, for fixed regions in an environment (for example, the regions 3a1), the first environment detection data obtained by the fixed environment sensors 2 in the fixed regions. If the moving environment sensor 3 moves also to the fixed regions and obtains second environment detection data in the fixed regions, the environment matching server 4 is capable of generating an environment information map by using the second environment detection data obtained in the fixed regions by the moving environment sensor 3 as environment detection data associated with the fixed regions. The precision of the second environment detection data may be higher than the precision of the first environment detection data.

For example, regarding the region 3a1-1 in Fig. 3, the moving environment sensor 3 moves to the region 3a1-1 and obtains the second environment detection data of the region 3a1-1. Accordingly, the environment matching server 4 uses the second environment detection data instead of the first environment detection data in the region 3a1-1, that is, associates the region 3a1-1 with the second environment detection data. However, the precision of the second environment detection data may be higher than the precision of the first environment detection data.

In at least one example, after generating an environment information map, the environment matching server 4 is capable of controlling a movement of the moving body 1 on the basis of the environment information map.

For example, the environment matching server 4 is capable of, on the basis of environment preference information obtained by the moving body 1, by using first environment detection data and second environment detection data, specifying a region that matches the environment preference information as a movement target region of the moving body 1.

Here, environment preference information may be obtained by the moving body 1. The environment preference information may reflect an environment condition requested by the moving body 1. For example, a user may input environment preference information to the moving body, or the moving body may read a QR code (registered trademark) or obtain environment preference information so as to receive an instruction in a wired or wireless manner.

In one specific embodiment, in a case where a person (in other words, a user) is mounted on the moving body, environment preference information input to the moving body 1 by the person may be, for example, "the environment temperature does not exceed 25°C". Accordingly, the environment condition requested to the moving body 1 is "the environment temperature does not exceed 25°C". The environment matching server 4 is capable of searching the environment information map for a region that matches the environment preference information, that is, a region in which the environment temperature does not exceed 25°C, and setting the matched region as a movement target region. After receiving an instruction about the movement target region transmitted by the environment matching server 4, the moving body 1 moves to the movement target region.

In another specific embodiment, in a case where an object (the object is, for example, an animal, a plant, or an object without life) is mounted on the moving body, the moving body 1 reads a QR code (registered trademark) on the object to obtain environment preference information, for example, "the wind velocity in the environment is higher than 3 m/second". Accordingly, the environment condition requested to the moving body 1 is "the wind velocity in the environment is higher than 3 m/second". The environment matching server 4 searches the environment information map for a region that matches the environment preference information, that is, a region in which the wind velocity in the environment is higher than 3 m/second, and sets the matched region as a movement target region. After receiving an instruction about the movement target region transmitted by the environment matching server 4, the moving body 1 moves to the movement target region.

In at least one example, more generally, environment preference information may be indicated by an evaluation function. The evaluation function may be a function of an environment parameter of at least one term. For example, an evaluation function $V_A$ is expressed by the following equation.

$$V_A = f(\text{environment parameter})$$

In the evaluation function $V_A$, the environment parameter may be at least one of parameters of temperature, humidity, wind velocity, scent, and the like.

The environment matching server 4 may, for each region in the environment information map, substitute the environment detection data in the region for the evaluation function $V_A$ to calculate the value of the evaluation function $V_A$, and specify the region in which the value of the evaluation function $V_A$ is maximum or minimum as the movement target region of the moving body 1.

In at least one example, the person or object mounted on the moving bodies 1 varies. Thus each moving body 1 may obtain and store one or more pieces of environment preference information. The moving body 1 transmits one of the one or more pieces of environment preference information to the environment matching server 4 in accordance with an environment matching trigger command. Accordingly, the environment matching server 4 is capable of specifying the movement target region of the moving body 1 in accordance with the trigger based on the environment matching trigger command regarding the one piece of environment preference information transmitted by the moving body 1.

In at least one example, at least one of the environment matching server 4, the moving body 1, and the environment adjustment system 5 controls the movement position of the moving environment sensor 3, or the moving environment sensor 3 moves along a predetermined route.

For example, Fig. 4 is a schematic diagram of a movement position of the moving environment sensor. As illustrated in Fig. 4, regarding a region to be measured 41, in a case where environment detection data in the region to be measured 41 needs to be obtained, at least one of the environment matching server 4, the moving body 1, and the environment adjustment system 5 transmits the position of the region to be measured 41 as the movement position of the moving environment sensor 3 to the moving environment sensor 3, and the moving environment sensor 3 moves to the movement position. Accordingly, second environment detection data of the region to be measured 41 is obtained.

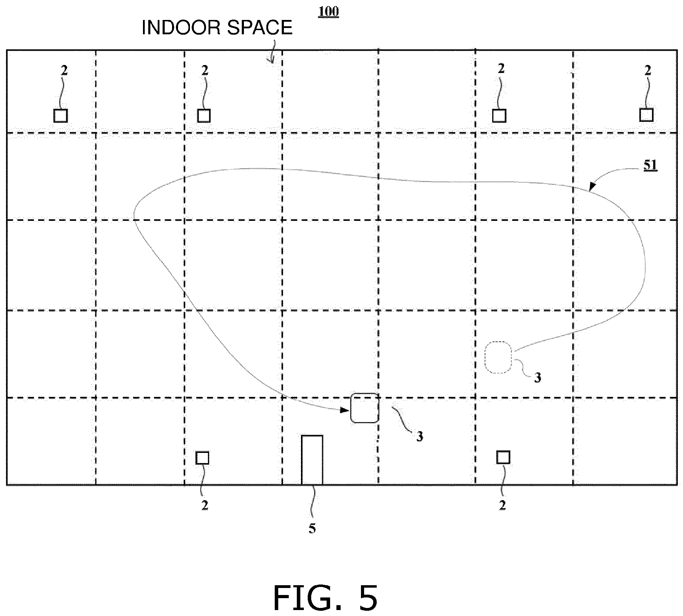

For example, Fig. 5 is a schematic diagram of a movement position of the moving environment sensor. As illustrated in Fig. 5, the moving environment sensor 3 is capable of moving along a predetermined route 51. In addition, the moving environment sensor 3 may move along the predetermined route 51 only once per predetermined time. Accordingly, the second environment detection data of each region along the predetermined route 51 can be regularly updated.

In at least one example, the moving environment sensor 3 may be provided separately from the moving body 1. A movement route of the moving environment sensor 3 and a movement route of the moving body 1 are independent of each other.

In at least another example, the moving environment sensor 3 may be provided in or on the moving body 1. A movement route of the moving body 1 provided with the moving environment sensor 3 does not overlap with a movement route of the moving environment sensor 3 provided separately from the moving body 1. This makes it possible to prevent the environment data of the same region from being obtained in a duplicate manner.

In at least one example, the moving environment sensor 3 may include a positioning unit and/or distance measuring device. Accordingly, the moving environment sensor 3 is capable of avoiding an obstacle and ensuring a safe distance from another object while moving.

In at least one example, the moving environment sensor 3 is capable of waiting in the place or moving to a designated place and waiting for a movement command trigger when finishing a movement task.

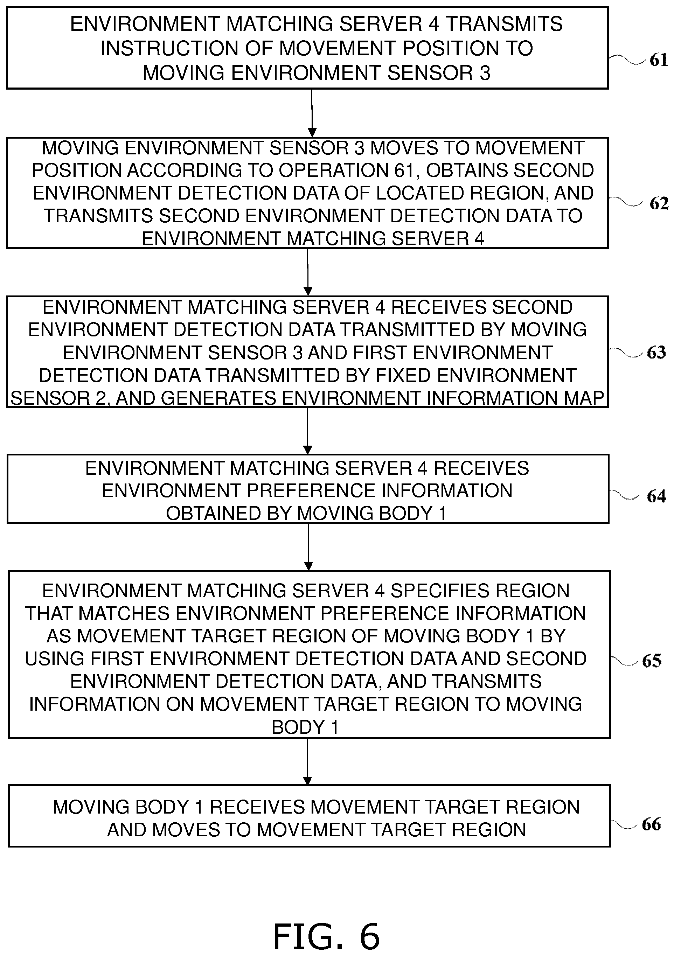

Fig. 6 is a schematic diagram of a control method for the moving body control system according to the first aspect of the example of the present disclosure. As illustrated in Fig. 6, the control method includes:

operation 61 in which the environment matching server 4 transmits an instruction of a movement position to the moving environment sensor 3;

operation 62 in which the moving environment sensor 3 moves to the movement position according to operation 61, obtains second environment detection data of the located region, and transmits the second environment detection data to the environment matching server 4;

operation 63 in which the environment matching server 4 receives the second environment detection data transmitted by the moving environment sensor 3 and first environment detection data transmitted by the fixed environment sensor 2, and generates an environment information map;

operation 64 in which the environment matching server 4 receives environment preference information obtained by the moving body 1, for example, the moving body 1 is capable of obtaining and storing one or more pieces of environment preference information, the moving body 1 is capable of transmitting one piece of environment preference information to the environment matching server 4 in accordance with an environment matching trigger command, and the environment matching server 4 is capable of, in the following operation 65, specifying a movement target region of the moving body 1 with respect to the one piece of environment preference information transmitted by the moving body 1 in accordance with the trigger based on the environment matching trigger command;

operation 65 in which the environment matching server 4 specifies a region that matches the environment preference information as a movement target region of the moving body 1 by using the first environment detection data and the second environment detection data, and transmits information on the movement target region to the moving body 1; and

operation 66 in which the moving body 1 receives the movement target region and moves to the movement target region.

In operation 61, alternatively, the moving body 1 and/or the environment adjustment system 5 may transmit an instruction of the movement position to the moving environment sensor 3, or the moving environment sensor 3 may move along a predetermined route.

In the first aspect of the example of the present disclosure, the moving environment sensor 3 moves in a wide range and is thus capable of obtaining information on more regions in the indoor space. Thus, the indoor space can be more finely divided into a plurality of regions, and the correspondence between environment detection data and the regions is more accurate. Thus, the accuracy of an environment information map increases, and the moving body 1 can be moved to a position more accurately.

<Second aspect of example>

A second aspect of an example of the present disclosure provides a moving body control system. The moving body control system according to the second aspect of the example of the present disclosure has the same hardware structure as that of the moving body control system 100 according to the first aspect of the example of the present disclosure.

In the second aspect of the example of the present disclosure, the environment matching server 4 is capable of redividing an indoor space to obtain a plurality of second regions, on the basis of environment detection data in a plurality of first regions obtained in the indoor space by using a first division method and environment preference information associated with the moving body 1, and specifying at least one of the second regions as a target movement region of the moving body 1 on the basis of environment detection data in the second regions and the environment preference information associated with the moving body 1.

In at least one example, the person or object mounted on the moving body 1 varies. Thus, the moving body 1 is capable of obtaining and storing one or more pieces of environment preference information and transmitting one of the one or more pieces of environment preference information to the environment matching server 4, and the environment matching server 4 is capable of redividing the indoor space with respect to the one piece of environment preference information and further specifying a target movement region of the moving body 1 with respect to the one piece of environment preference information. In at least one example, the first regions may be individual regions in an environment information map, and the first division method may be a method of dividing in advance the indoor space on the basis of the detection range and detection precision of the fixed environment sensor 2 and/or the moving environment sensor 3. As a result of dividing the indoor space on the basis of the first division method, a plurality of first regions can be obtained. The environment detection data in the first regions may be at least one of first environment detection data and second environment detection data.

For example, an environment information map may be obtained on the basis of the first environment detection data obtained by the fixed environment sensor 2. Accordingly, the first regions may be the individual regions a to f in Fig. 2, and the environment detection data may be first environment detection data in the individual first regions. **In** this case, the moving body control system 100 may include the fixed environment sensor 2 and may not include the moving environment sensor 3.

For example, an environment information map may be obtained on the basis of the first environment detection data obtained by the fixed environment sensor 2 and the second environment detection data obtained by the moving environment sensor 3. Accordingly, the first regions may be the individual regions 3a in Fig. 3, and the environment detection data in the first regions may be first environment detection data and second environment detection data. That is, the environment detection data in the region 3a2 is second environment detection data in the region, and the environment detection data in the region 3a1 is first environment detection data in the region. In a case where the region 3a1 has not only first environment detection data but also second environment detection data, the second environment detection data is regarded as the environment detection data in the region 3a1. In this case, the moving body control system 100 includes the fixed environment sensor 2 and the moving environment sensor 3.

Furthermore, for example, an environment information map may be obtained on the basis of the second environment detection data obtained by the moving environment sensor 3. Accordingly, the first regions may be individual regions generated by division based on the second environment detection data, and the environment detection data may be the second environment detection data in each first region. In this case, the moving body control system 100 may include the moving environment sensor 3 and may not include the fixed environment sensor 2.

In the following description of the second aspect of the example of the present disclosure, an example will be described in which the first regions are, for example, the individual regions 3a in Fig. 3. The description is applied also to a situation in which the first regions are other regions.

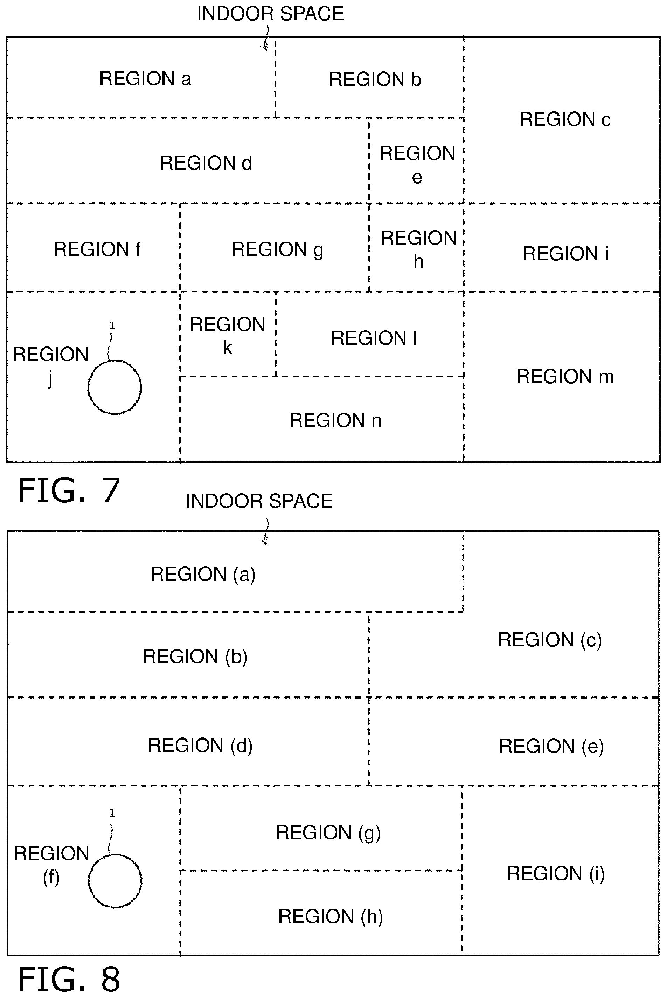

Fig. 7 is a schematic diagram of a plurality of second regions according to the second aspect of the example of the present disclosure. As illustrated in Fig. 7, the environment matching server 4 is capable of dividing an indoor space into a plurality of second regions on the basis of environment preference information associated with the moving body 1. The number of the second regions may be, for example, fourteen, that is, regions a to m.

To specify a target movement region on the basis of the plurality of first regions illustrated in Fig. 3, the environment matching server needs to substitute the environment detection data of each of the thirty-five first regions in Fig. 3 for the evaluation function $V_A$, and calculate the values of the evaluation function $V_A$ for the individual first regions. Thus, the environment matching server 4 needs to perform substitution and calculation thirty-five times, which makes the calculation time long. If there are at least two first regions having the same value of the evaluation function $V_A$, it is further necessary to select one of the at least two first regions as a target movement region, which further increases the processing time of the environment matching server 4.

In a case where the environment matching server 4 substitutes the environment detection data of each of the region a to the region m in Fig. 7 (i.e., each of second regions) for the evaluation function $V_A$ and calculates the values of the evaluation function $V_A$ for the individual second regions, the environment matching server 4 is capable of specifying a target movement region of the moving body 1 from among the plurality of second regions only by performing substitution and calculation fourteen times. Thus, the environment matching server 4 is capable of specifying the target movement region with a smaller calculation amount. In addition, some of the second regions have a larger area than the first region. Thus, in a case where the second regions are target regions, as a result of selecting a smaller region among the second regions as a target region, the processing time of the environment matching server 4 can be further shortened.

According to the second aspect of the example of the present disclosure, an indoor space is more rationally divided on the basis of environment preference information associated with the moving body 1, and thus the number of second regions can be smaller than the number of first regions. Thus, the environment matching server is capable of specifying the target movement region of the moving body 1 more quickly with a smaller calculation amount.

In at least one example, when the environment matching server 4 redivides the indoor space, environment detection data in the plurality of used first regions may be environment detection data obtained at a current time T0 (i.e., real-time environment detection data). Alternatively, the environment detection data in the plurality of first regions may be environment detection data obtained at a time T1 before the current time T0. Alternatively, environment detection data obtained within a time period before the current time T0, for example, an average value or the like of the environment detection data obtained from the time T1 to the time T0, may be used.

In at least one example, the method in which the environment matching server 4 redivides an indoor space may be a method of performing a combining process on the first regions on the basis of environment detection data in each first region and environment preference information associated with the moving body 1, thereby obtaining a plurality of second regions.

In one specific embodiment, the environment matching server 4 is capable of performing a combining process on a plurality of first regions on the basis of one environment parameter of environment preference information. Specifically, the environment matching server 4 is capable of combining, on the basis of the one environment parameter of environment preference information, adjacent first regions between which the numerical value of the environment parameter varies within a predetermined range into one second region.

For example, the one environment parameter of environment preference information may be, for example, temperature. The environment matching server 4 is capable of combining, by using temperature detection data of the environment detection data in each first region, adjacent first regions between which the temperature varies within a range of 1°C into one second region. For example, four first regions 3a at the lower right corner in Fig. 3 respectively have temperature detection data of 25.5°C, 26°C, 26.5°C, and 26°C. Thus, the four first regions 3a are combined to obtain the region m, which is one second region in Fig. 7.

In the above-described specific embodiment, the one environment parameter of environment preference information may be only one environment parameter of the environment preference information, or may be one of a plurality of environment parameters of the environment preference information, for example, an environment parameter having the largest effect on the evaluation function.

The method in which the environment matching server 4 performs a combining process on a plurality of first regions on the basis of one environment parameter of environment preference information is not limited thereto, and another method may be used.

In another specific embodiment, the environment matching server 4 is capable of performing a combining process on a plurality of first regions on the basis of at least two environment parameters of environment preference information. Specifically, the environment matching server 4 calculates, on the basis of the at least two environment parameters of environment preference information, the numerical values of the at least two environment parameters in each first region to obtain a comprehensive parameter value, and combines adjacent first regions between which the comprehensive parameter value varies within a predetermined range into one second region.

Fig. 8 is another schematic diagram of a plurality of second regions according to the second aspect of the example of the present disclosure. Fig. 8 illustrates a result of a combining process performed by the environment matching server 4 on a plurality of first regions on the basis of at least two environment parameters of environment preference information. As illustrated in Fig. 8, Fig. 8 includes nine second regions, a region (a) to a region (i).

For example, the at least two environment parameters of environment preference information may be, for example, temperature and humidity. The environment matching server 4 performs weighted addition calculation on temperature detection data and humidity detection data of the environment detection data in each first region so as to obtain a comprehensive parameter value, and combines adjacent first regions between which the comprehensive parameter value varies within a range of 0.5 into one second region. For example, three rightmost first regions 3a in the third row in Fig. 3 respectively have comprehensive parameter values of 20, 19.5, and 19. Thus, the three first regions 3a are combined to obtain the region (e), which is one second region in Fig. 8.

In the above-described specific embodiment, the at least two environment parameters of environment preference information may be all environment parameters of the environment preference information, or may be at least two environment parameters of a plurality of environment parameters of the environment preference information. For example, the at least two environment parameters are environment parameters having a large effect on the evaluation function.

The method in which the environment matching server 4 performs a combining process on a plurality of first regions on the basis of at least two environment parameters of environment preference information is not limited thereto, and another method may be used.

In at least one example, the environment matching server 4 is capable of redividing the indoor space by using division support information. For example, the environment server 5 redivides the indoor space for the moving body 1 on the basis of the environment detection data in the first regions, the environment preference information associated with the moving body 1, and the division support information.

Here, the division support information includes at least one of a remaining battery level of the moving body 1, a preset non-movement-target region, a movement target region designated by the user of the moving body 1, information on a calculation amount acceptable by the environment matching server 4, movement restriction information of the moving body 1, and the like.

Specifically, the preset non-movement-target region may be a region that is not a preset movement target region. The designated movement target region may be a region that is designated by the user of the moving body 1 and that is preferentially set as a movement target region. The information on a calculation amount acceptable by the environment matching server 4 is, for example, several calculations per second. When the number of second regions generated through division is large and exceeds the calculation amount acceptable by the environment matching server 4, the environment matching server 4 performs rougher division to reduce the number of second regions, so that the number of second regions matches the calculation amount acceptable by the environment matching server 4. The movement restriction information of the moving body 1 may be failure information of the moving body 1 and may be, for example, information indicating that the moving body 1 is capable of moving only to the right or left.

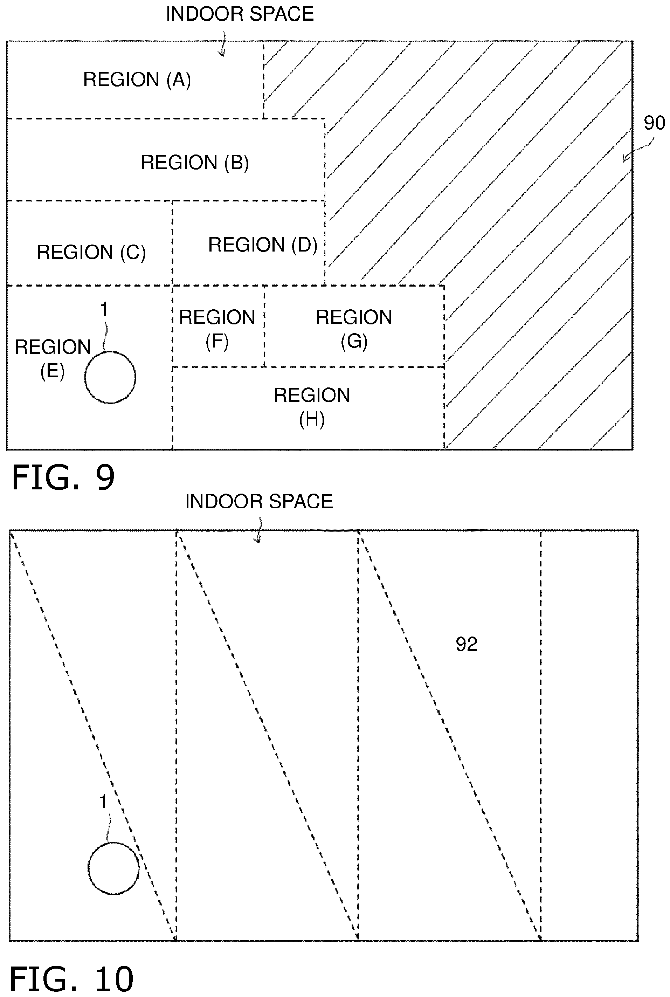

Fig. 9 is another schematic diagram of a plurality of second regions according to the second aspect of the example of the present disclosure. In Fig. 9, the environment matching server 4 redivides the indoor space by using division support information. The division support information is the remaining battery level of the moving body 1. As illustrated in Fig. 9, a region 90 is a region determined not to be reached by the moving body 1 on the basis of the remaining battery level of the moving body 1. Thus, the region other than the region 90 is divided into a plurality of second regions, a region (A) to a region (H).

In at least one example, one preset division template can be selected from among a plurality of preset division templates, and a plurality of second regions can be obtained on the basis of the preset division template. Accordingly, another method of redividing the indoor space can be provided. The plurality of present division templates may be stored in the environment matching server 4 and/or the moving body 1.

For example, the environment matching server 4 performs a real-time process on the basis of the environment detection data in the first regions. Accordingly, in a case where the indoor space cannot be redivided, the environment matching server 4, the moving body 1, or the user of the moving body 1 selects one preset division template from among the plurality of preset division templates, and a plurality of second regions can be obtained.

In at least one example, the preset division template may be a division template preset by the environment matching server 4. For example, in a case where the moving body control system 100 is in an idle state, the environment matching server 4 may be a region division template obtained on the basis of current environment detection data in the idle state and the environment preference information associated with the moving body 1. Alternatively, the preset division template may be a region division template preset by the environment matching server 4 on the basis of the adjustment ability of the environment adjustment system 5. Alternatively, the preset division template may be a region division template preset by the moving body 1. Alternatively, the preset division template may be a region division template preset by the user of the moving body 1.

In at least one example, a preset division template may be generated by using the above-described division support information.

Fig. 10 is another schematic diagram of a plurality of second regions according to the second aspect of the example of the present disclosure. In Fig. 10, a plurality of second regions 92 are obtained on the basis of a region division template preset by the user of the moving body 1.

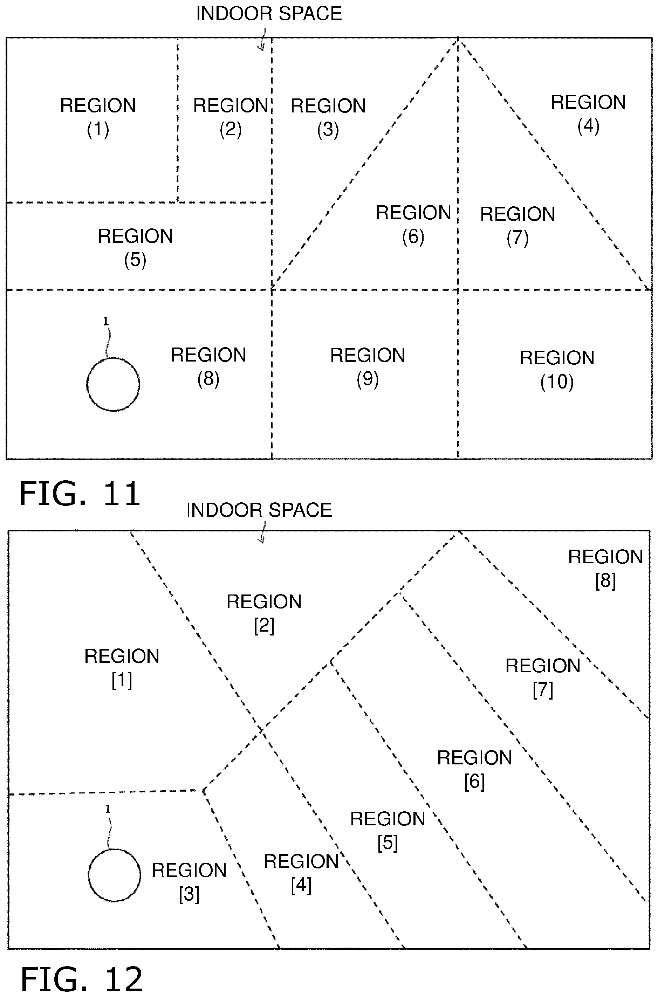

Fig. 11 is another schematic diagram of a plurality of second regions according to the second aspect of the example of the present disclosure. In Fig. 11, a plurality of second regions, a region (1) to a region (10), are obtained on the basis of a region division template preset by the environment matching server 4 when the moving body control system 100 is in an idle state.

Fig. 12 is another schematic diagram of a plurality of second regions according to the second aspect of the example of the present disclosure. In Fig. 12, a plurality of second regions, a region [1] to a region [8], are obtained on the basis of a region division template preset by the moving body. The preset region division template is generated on the basis of division support information. The division support information may be movement restriction information of the moving body 1, for example, information indicating that the moving body 1 has a failure in left turn and is incapable of accurately making a left turn. Thus, as illustrated in Fig. 12, in a left portion of an indoor environment, the individual second regions (i.e., the region [1] and the region [3]) have a large area, which matches a movement restriction that the moving body 1 is incapable of accurately and precisely making a left turn. In a right portion of the indoor environment, the individual second regions (i.e., the region [4] to the region [8]) have a small area, and thus the moving body 1 is capable of reaching the individual second regions having a small area by making a right turn.

In at least one example, in a case where two or more preset division templates are provided, a preset division template may be selected by the environment matching server 4. Alternatively, a preset division template may be selected by the moving body 1. Alternatively, a preset division template may be selected in accordance with a selection instruction of the user of the moving body 1.

A preset division template may be selected in conformity with a predetermined rule. The rule may be automatically set by the environment matching server 4 or the moving body 1, or may be set by the user of the moving body 1. For example, the rule may be that the environment matching server 4 preferentially selects a division template preset when the system is in an idle state at a time closest to the time when an environment matching trigger command is received. For example, the rule may be that the moving body 1 preferentially selects a preset division template on the basis of movement restriction information, subsequently the user of the moving body 1 selects a set division template, and finally the environment matching server 4 selects a division template calculated when the system is in an idle state.

In at least one example, while the moving body 1 is moving to a target movement region, the environment detection data in each first region may be periodically updated. The environment matching server 4 redivides an indoor space on the basis of the updated environment detection data and the environment preference information associated with the moving body 1, thereby being capable of updating the result of redivision of the indoor space and updating the target movement region on the basis of the updated result of redivision and the environment preference information. Accordingly, in a case where an environment parameter in the indoor space changes, the target movement region can be timely updated.

In at least one example, the indoor space can be redivided on the basis of an environment matching trigger command, and a plurality of second regions can be obtained. For example, in response to receipt of an environment matching trigger command transmitted by the moving body 1, the environment matching server 4 redivides the predetermined space to obtain a plurality of second regions. Alternatively, after the moving body 1 has transmitted an environment matching trigger command, the moving body 1 selects one of the plurality of preset division templates stored in the moving body 1, obtains a plurality of second regions, and transmits information on the second regions to the environment matching server 4 so as to specify a target movement region from among the plurality of second regions.

In at least one example, the environment matching server 4 redivides the indoor space in a predetermined cycle to obtain a plurality of second regions, and stores a result of the one latest redivision. The result of the one latest redivision can be one of the above-described preset division templates. The result of the preceding redivision is transmitted to the moving body 1.

In at least one example, the environment matching server 4 performs a redivision process on the indoor space for different moving bodies 1. The result of redivision of the indoor space may be the same or different among different moving bodies 1.

In at least one example, information on the plurality of second regions obtained by redividing the indoor space by the environment matching server 4 may be stored in the environment matching server 4 or may be stored in the corresponding moving body 1.

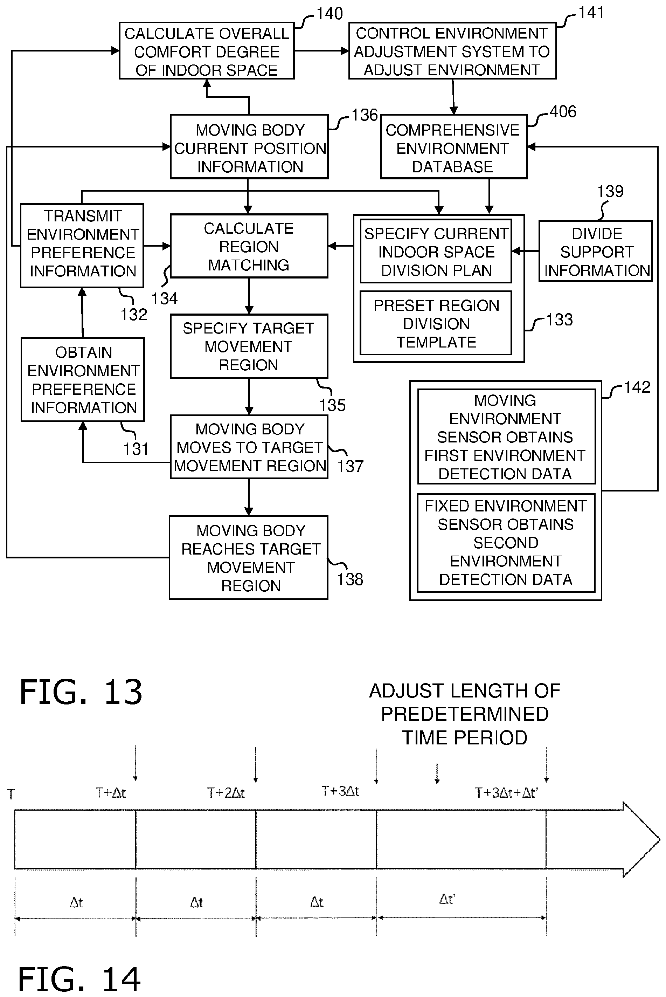

Fig. 13 is a schematic diagram of control of a moving body by the moving body control system according to the second aspect of the example of the present disclosure.

As illustrated in Fig. 13,
in operation 131, the moving body 1 is capable of obtaining environment preference information.

In operation 132, the environment preference information is transmitted.

In operation 133, the environment matching server 4 redivides the indoor environment on the basis of the environment detection data of the first regions in the comprehensive environment database 406, the received environment preference information, and division support information, that is, specifies a current indoor space division plan to obtain information on second regions.

In operation 134, the environment matching server 4 calculates matching on the basis of the environment detection information in the second regions and the environment preference information.

In operation 135, a target movement region is specified on the basis of the matching result in operation 134 and moving body current position information 136.

In operation 137, the moving body 1 moves to the target movement region.

In operation 138, the moving body 1 reaches the target movement region.

In operation 140, the environment matching server 4 calculates an overall comfort degree of the indoor space.

In operation 141, the environment matching server 4 controls the environment adjustment system 5 on the basis of a calculation result of the overall comfort degree.

In operation 142, the moving environment sensor 3 and the fixed environment sensor 2 obtain first environment detection data and second environment detection data and transmit the obtained first environment detection data and second environment detection data to the comprehensive environment database 406, thereby generating environment detection data.

According to the second aspect of the example of the present disclosure, an indoor space is more rationally divided, and thus the number of second regions can be reduced to be smaller than the number of first regions. Thus, the environment matching server is capable of specifying the target movement region of the moving body 1 more quickly with a smaller calculation amount.


<Third aspect of example>

A third aspect of an example of the present disclosure provides a moving body control system. The moving body control system according to the third aspect of the example of the present disclosure has the same hardware structure as that of the moving body control system 100 according to the first aspect of the example of the present disclosure.

In the third aspect of the example of the present disclosure, the environment matching server 4 is capable of specifying a movement target region for two or more moving bodies 1. In one specific embodiment, the two or more moving bodies 1 may be moving bodies 1 that output an environment matching trigger command within the same predetermined time period.

Fig. 14 illustrates an example of an operation time axis of the environment matching server. From time T, in units of predetermined time periods, the environment matching server 4 takes statistics on environment matching trigger commands output by the moving bodies 1 within the predetermined time period. The length of the predetermined time period is adjustable. As illustrated in Fig. 14, at time T+$\Delta$t, the environment matching server 4 takes statistics on environment matching trigger commands output by a plurality of moving bodies 1 from time T to time T+$\Delta$t, and specifies a target movement region for each moving body 1. The length of the predetermined time period is $\Delta$t. At a certain time after T+3$\Delta$t, if the length of the predetermined time period adjusted by the environment matching server 4 is $\Delta$t', the environment matching server 4 takes, at time T+3$\Delta$t+$\Delta$t, statistics on environment matching trigger commands output by the moving bodies 1 within the time period $\Delta$t'.

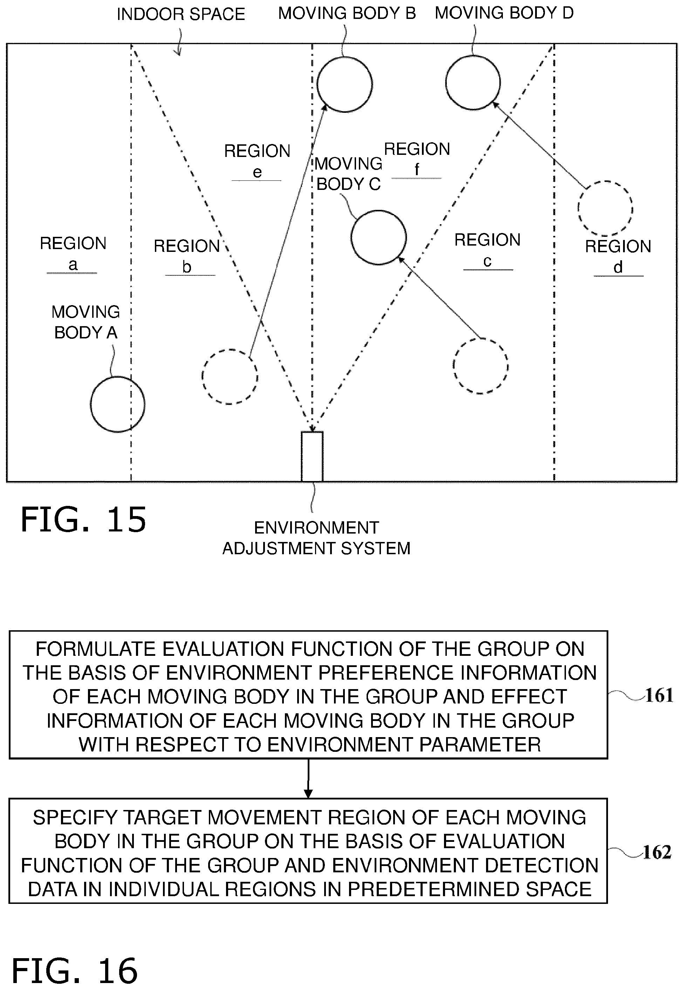

Fig. 15 is a schematic diagram of target movement regions of individual moving bodies specified by the environment matching server on the basis of the environment preference information of the individual moving bodies.

In Fig. 15 and the following figures, two or more moving bodies 1 in an indoor space may be a moving body A, a moving body B, a moving body C, and a moving body D. The above four moving bodies are merely examples. The number of moving bodies may be other than four, for example, two, three, five, or the like.

As illustrated in Fig. 15, within a predetermined time period, the moving body B, the moving body C, and the moving body D each output an environment matching trigger command, and the environment matching server 4 specifies target movement regions for the moving body B, the moving body C, and the moving body D in response to the environment matching trigger commands on the basis of environment preference information associated with each of the moving body B, the moving body C, and the moving body D and environment detection data in individual regions (for example, the regions a to f).

As illustrated in Fig. 15, all the target movement regions of the moving body B, the moving body C, and the moving body D may be specified as the region f. However, if all of the moving body B, the moving body C, and the moving body D move to the region f, the region f is too crowded with the many moving bodies gathered thereto, or mutual effects of the moving bodies may change an environment parameter in the region f. The change in the environment parameter in the region f may hinder the matching with the environment preference information of the moving body B, the moving body C, or the moving body D. For example, if the user on the moving body C is sensitive particularly to scent, the user on the moving body B is sensitive particularly to temperature, and all of the moving body B, the moving body C, and the moving body D move to the region f, the temperature of the region f is changed by the user on the moving body C and the user on the moving body D, and thus the user on the moving body B does not feel comfortable after moving to the region f. In addition, the scent of the region f may be changed by the user on the moving body B and the user on the moving body D, and thus the degree of comfort of the user on the moving body C may decrease.

In the third aspect of the example of the present disclosure, with two or more moving bodies that output environment matching trigger commands within a predetermined time period forming a group, the environment matching server 4 is capable of specifying the target movement region of each moving body in the group on the basis of the environment preference information of each moving body in the group and the effect information of each moving body in the group with respect to an environment parameter.

In at least one example, the target movement regions of different moving bodies in the same group may be the same or different. Thus, the target movement regions of the individual moving bodies in the group can form one target movement region set. The target movement region set includes at least one or two or more target movement regions.

Fig. 16 is a schematic diagram of a method of specifying a target movement region of each moving body in a group in the third aspect of the example of the present disclosure. As illustrated in Fig. 16, the method includes: operation 161 of formulating an evaluation function of the group on the basis of the environment preference information of each moving body in the group and the effect information of each moving body in the group with respect to an environment parameter; and operation 162 of specifying a target movement region of each moving body in the group on the basis of the evaluation function of the group and the environment detection data in individual regions in a predetermined space.

For example, the moving body B, the moving body C, and the moving body D each output an environment matching trigger command within a predetermined time period. The environment preference information of the moving body B is indicated by the following evaluation function.

$$V_B = f(ZONE^B_{\text{TEMPERATURE}})$$

Note that the degree of comfort of the user on the moving body B increases as the value of $V_B$ increases.

$$ZONE^B_{\text{TEMPERATURE}}$$

indicates the temperature of a region.

$$V_B = f(ZONE^B_{\text{TEMPERATURE}})$$

indicates that the value of $V_B$ depends on one function regarding a region temperature. That is, whether the user feels comfortable depends on the temperature of the environment in which the user is located in the present example. In this function,

$$ZONE^B_{\text{TEMPERATURE}} \in \{\text{REGION}\,a_{\text{TEMPERATURE}}, \text{REGION}\,b_{\text{TEMPERATURE}}, \text{REGION}\,c_{\text{TEMPERATURE}}, \text{REGION}\,d_{\text{TEMPERATURE}}, \text{REGION}\,e_{\text{TEMPERATURE}}, \text{REGION}\,f_{\text{TEMPERATURE}}\}$$,

that is, a variable

$$ZONE^B_{\text{TEMPERATURE}}$$

takes a value from the temperature in each region. The region corresponding to the region temperature at which $V_B$ takes a maximum value is a region in which the user on the moving body B feels most comfortable. Similarly, the environment preference information of the moving body C and the environment preference information of the moving body D are indicated by the evaluation functions

$$V_C = f(ZONE^C_{\text{SCENT}})$$

and

$$V_D = f(ZONE^D_{\text{NOISE}}),$$

respectively, where

$$ZONE^C_{\text{SCENT}} \in \{\text{REGION}\,a_{\text{SCENT}}, \text{REGION}\,b_{\text{SCENT}}, \text{REGION}\,c_{\text{SCENT}}, \text{REGION}\,d_{\text{SCENT}}, \text{REGION}\,e_{\text{SCENT}}, \text{REGION}\,f_{\text{SCENT}}\}$$

$$ZONE^D_{\text{NOISE}} \in \{\text{REGION}\,a_{\text{NOISE}}, \text{REGION}\,b_{\text{NOISE}}, \text{REGION}\,c_{\text{NOISE}}, \text{REGION}\,d_{\text{NOISE}}, \text{REGION}\,e_{\text{NOISE}}, \text{REGION}\,f_{\text{NOISE}}\}$$,

that is, the degree of comfort of the user on the moving body C and the degree of comfort of the user on the moving body D depend on the scent and noise, respectively, of the environments in which the users are located.

As a result of comprehensively performing environment matching, with the moving body B, the moving body C, and the moving body D being considered as one group, an evaluation function $V_{BCD}$ of the group is set as follows.

$$V_{BCD} = f(ZONE^B_{TEMPERATURE}, ZONE^C_{SCENT}, ZONE^D_{NOISE})$$
$$= g(ZONE^B_{TEMPERATURE}, ZONE^C_{SCENT}, ZONE^D_{NOISE}) + eff_B(ZONE^B_{TEMPERATURE}, ZONE^C_{SCENT}, ZONE^D_{NOISE}) +$$
$$eff_C(ZONE^B_{TEMPERATURE}, ZONE^C_{SCENT}, ZONE^D_{NOISE}) + eff_D(ZONE^B_{TEMPERATURE}, ZONE^C_{SCENT}, ZONE^D_{NOISE})$$

Note that

$$f(ZONE^B_{TEMPERATURE}, ZONE^C_{SCENT}, ZONE^D_{NOISE})$$

indicates that the value of $V_{BCD}$ is determined by variables

$$ZONE^B_{TEMPERATURE}, ZONE^C_{SCENT}, ZONE^D_{NOISE}$$

and corresponds to the target movement regions of the moving body B, the moving body C, and the moving body D.

$$f(ZONE^B_{TEMPERATURE}, ZONE^C_{SCENT}, ZONE^D_{NOISE})$$

may further be indicated by superposition of the following functions.

$$g(ZONE^B_{TEMPERATURE}, ZONE^C_{SCENT}, ZONE^D_{NOISE})$$

$$eff_B(ZONE^B_{TEMPERATURE}, ZONE^C_{SCENT}, ZONE^D_{NOISE})$$

$$eff_C(ZONE^B_{TEMPERATURE}, ZONE^C_{SCENT}, ZONE^D_{NOISE})$$

$$eff_D(ZONE^B_{TEMPERATURE}, ZONE^C_{SCENT}, ZONE^D_{NOISE})$$

The function

$$g(ZONE^B_{TEMPERATURE}, ZONE^C_{SCENT}, ZONE^D_{NOISE})$$

indicates the degree of comfort of the entire group when only the environment preference information of the moving bodies B, C, and D is taken into consideration. The function

$$eff_B(ZONE^B_{TEMPERATURE}, ZONE^C_{SCENT}, ZONE^D_{NOISE})$$

reflects effect information of the moving body B with respect to the environment parameters, for example, an effect on the degree of comfort in the environment of the user on the moving body C and the user on the moving body D resulting from the amount of change in the environment parameters caused by the user on the moving body B. Similarly, the function

$$eff_C(ZONE^B_{TEMPERATURE}, ZONE^C_{SCENT}, ZONE^D_{NOISE})$$

indicates effect information of the moving body C with respect to the environment parameters. The function

$$eff_D(ZONE^B_{TEMPERATURE}, ZONE^C_{SCENT}, ZONE^D_{NOISE})$$

indicates effect information of the moving body D with respect to the environment parameters.

In the present example, the evaluation function $V_{BCD}$ of the group may have another form. For example, the calculation among

$$g(ZONE_{\text{TEMPERATURE}}^{B}, ZONE_{\text{SCENT}}^{C}, ZONE_{\text{NOISE}}^{D})$$

$$\text{eff}_{B}(ZONE_{\text{TEMPERATURE}}^{B}, ZONE_{\text{SCENT}}^{C}, ZONE_{\text{NOISE}}^{D})$$

$$\text{eff}_{C}(ZONE_{\text{TEMPERATURE}}^{B}, ZONE_{\text{SCENT}}^{C}, ZONE_{\text{NOISE}}^{D})$$

$$\text{eff}_{D}(ZONE_{\text{TEMPERATURE}}^{B}, ZONE_{\text{SCENT}}^{C}, ZONE_{\text{NOISE}}^{D})$$

may include other types of mathematical calculation, such as subtraction, multiplication, and division.

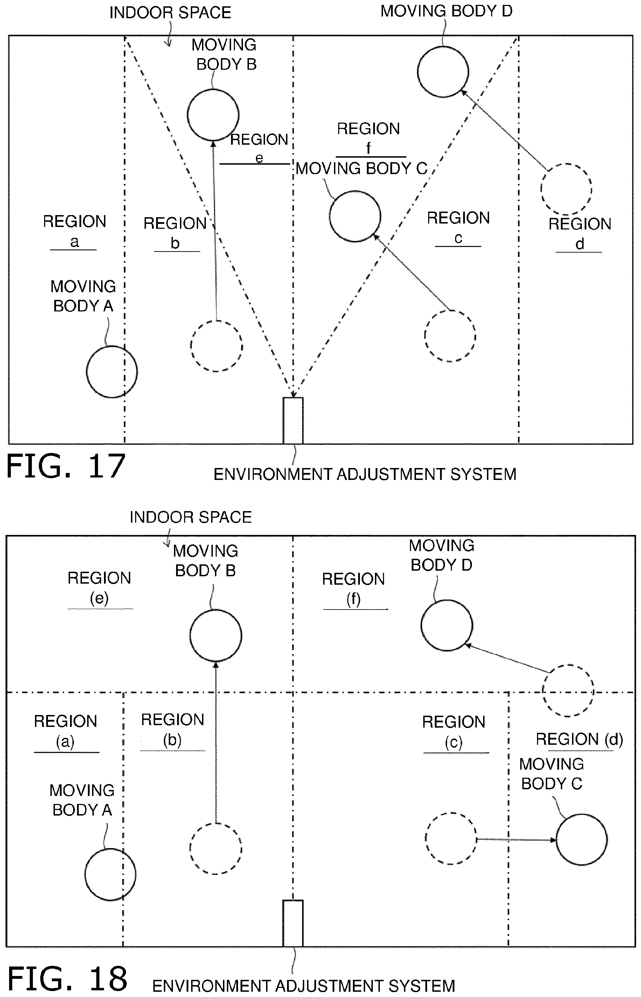

Fig. 17 is a schematic diagram of target movement regions of individual moving bodies specified by the environment matching server on the basis of an evaluation function of a group. As illustrated in Fig. 17, the evaluation function of the group, the target movement regions of the moving body B, the moving body C, and the moving body D are the region e, the region f, and the region f, respectively. Thus, the effect among the moving bodies is reduced.

In the third aspect of the example of the present disclosure, the functions
$\text{eff}_B$, $\text{eff}_C$, $\text{eff}_D$
are added to the evaluation function of the group. As a result of calculating the evaluation function of the group, the issue of mutual effects among the moving bodies is solved.

In the third aspect of the example of the present disclosure, the evaluation function of the group does not include the functions
$\text{eff}_B$, $\text{eff}_C$, $\text{eff}_D$
and may include only the following.

$$g(ZONE_{\text{TEMPERATURE}}^{B}, ZONE_{\text{SCENT}}^{C}, ZONE_{\text{NOISE}}^{D})$$

That is, with two or more moving bodies forming a group, the environment matching server 4 is capable of formulating an evaluation function of the group on the basis the environment preference information of each moving body in the group, and specifying the target movement region of each moving body in the group on the basis of the evaluation function of the group. Accordingly, a target movement region can be specified for the group.

In the method illustrated in Fig. 16, when the environment matching server 4 performs a matching process on the environment detection data of individual regions and the evaluation function of the group, the individual regions may be a plurality of first regions obtained in the indoor space by using the first division method. For the description of the first regions, the second aspect of the example of the present disclosure can be referred to.

In the method illustrated in Fig. 16, when the environment matching server 4 performs a matching process on the environment detection data of individual regions and the evaluation function of the group, the individual regions may be a plurality of second regions obtained by redividing the indoor space. For example, the environment matching server 4 is capable of selecting at least one environment parameter from the evaluation function of the group, redividing the indoor space on the basis of the selected environment parameter, and obtaining a plurality of second regions. Alternatively, the environment matching server 4 is capable of selecting one of a plurality of preset division templates, dividing the indoor space, and obtaining a plurality of second regions. For the detailed description of the method of obtaining the second regions, the second aspect of the example of the present disclosure can be referred to.

Fig. 18 is another schematic diagram of target movement regions of individual moving bodies specified by the environment matching server on the basis of an evaluation function of a group. As illustrated in Fig. 18, regions (a) to (f) are a plurality of second regions obtained by redividing the indoor space on the basis of the evaluation function of the group. On the basis of the plurality of second regions, the environment matching server specifies the target movement regions for the moving bodies B, C, and D.

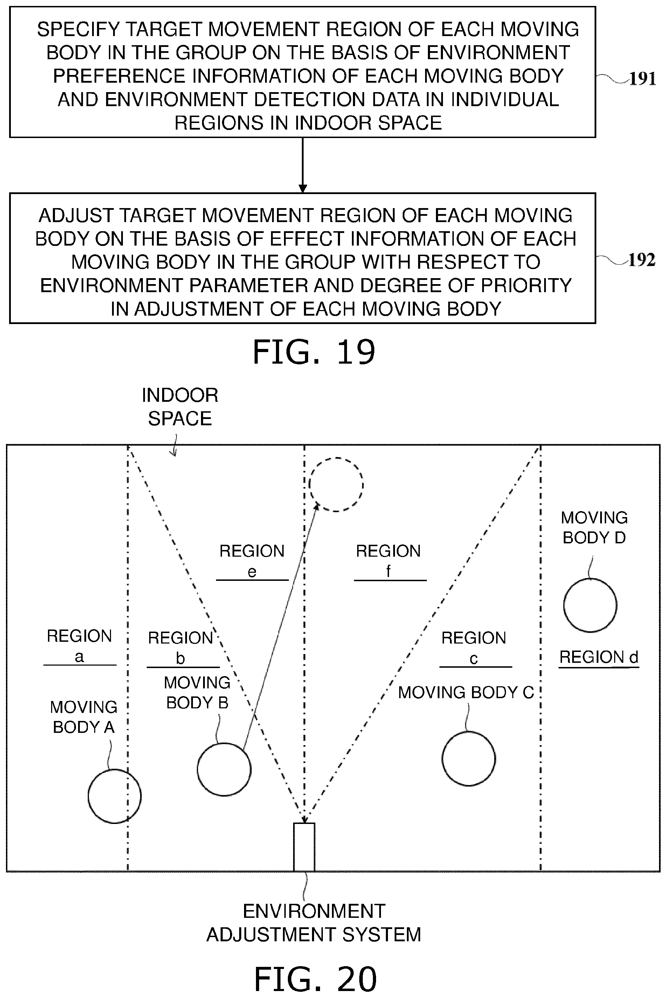

Fig. 19 is another schematic diagram of a method of specifying a target movement region of each moving body in a group in the third aspect of the example of the present disclosure. As illustrated in Fig. 19, the method includes:

operation 191 of specifying a target movement region of each moving body in the group on the basis of the environment preference information of each moving body and the environment detection data in individual regions in an indoor space; and

operation 192 of adjusting the target movement region of each moving body on the basis of effect information of each moving body in the group with respect to an environment parameter and the degree of priority in adjustment of each moving body.

In operation 191 and operation 192, the method of dividing the indoor space into regions may be the same or different among different moving bodies in the group. For example, a target movement region may be specified for some moving bodies in the group on the basis of the environment detection data of the first regions obtained using the first division method, and a target movement region may be specified for other moving bodies in the group on the basis of the environment detection data of the second regions obtained by redividing the indoor space. For the description related to the first regions and the second regions, the second aspect of the example of the present disclosure can be referred to.

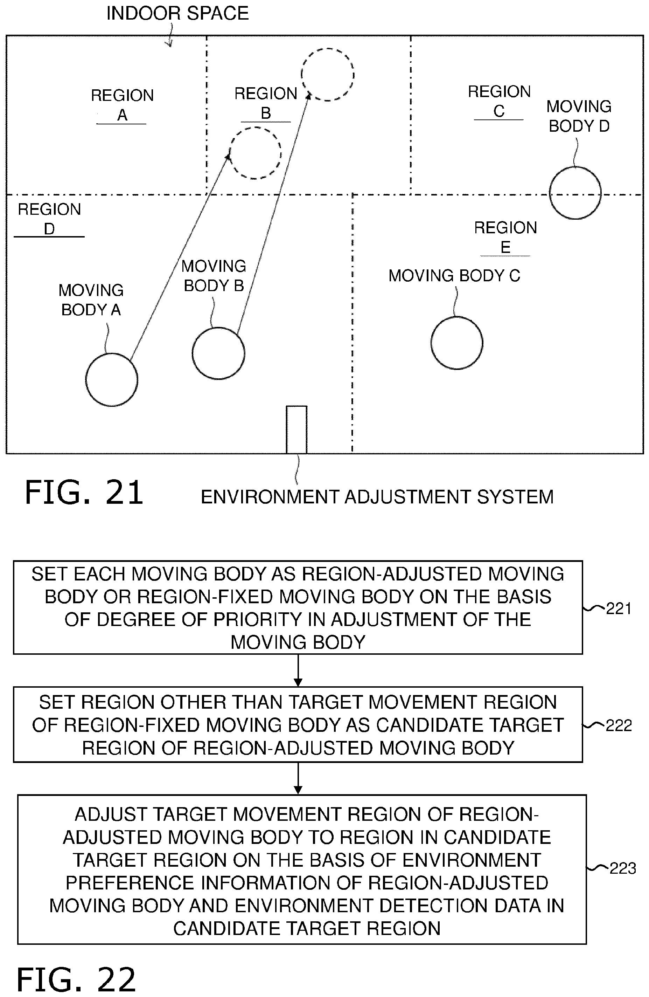

Fig. 20 is a schematic diagram of a target movement region of the moving body B specified by the environment matching server on the basis of operation 191. Fig. 21 is a schematic diagram of a target movement region of the moving body A specified by the environment matching server on the basis of operation 191.

As illustrated in Fig. 20, the environment matching server 4 receives environment matching trigger commands of the moving body A and the moving body B within a predetermined time period. Regarding the moving body B, the environment matching server 4 performs division into regions by using the first division method to obtain a plurality of first regions, performs a matching process on the basis of the environment detection data of the first regions, and obtains the region f as the target movement region of the moving body B.

As illustrated in Fig. 21, regarding the moving body A, the environment matching server 4 performs division into regions based on the environment preference information of the moving body A to divide the indoor space into regions A to E, performs calculation on the basis of the regions A to E, and obtains the region B as the target movement region of the moving body A. As can be understood from Fig. 20 and Fig. 21, the region f in Fig. 20 and the region B in Fig. 21 overlap to some extent. If the moving body A and the moving body B move in accordance with the calculation result, the moving body A and the moving body B become very close to each other, and the effect of the both moving bodies results in a decrease in the degree of comfort. That is, it is specified that, on the basis of effect information of the individual moving bodies in the group with respect to an environment parameter, an issue of interference in the degree of comfort between the moving body A and the moving body B is likely to occur.

For example, it is assumed that the user of the moving body A is sensitive particularly to illumination and scent, and the environment matching server divides the indoor space into the regions A to E illustrated in Fig. 21 on the basis of indoor illumination and scent distributions, and calculates that the region B is the most comfortable region of the user, that is, the target movement region of the moving body A. However, if the user of the moving body B has a strong body smell, the body smell of the user of the moving body B affects the user of the moving body A. Accordingly, the degree of comfort of the user of the moving body A does not reach the estimation obtained at the matching calculation, and the degree of comfort is interfered with.

Fig. 22 is a schematic diagram of a method of implementing operation 192. As illustrated in Fig. 22, the method of implementing operation 192 includes:

operation 221 of setting each moving body as a region-adjusted moving body or a region-fixed moving body on the basis of the degree of priority in adjustment of the moving body;

operation 222 of setting a region other than a target movement region of a region-fixed moving body as a candidate target region of a region-adjusted moving body; and

operation 223 of adjusting the target movement region of the region-adjusted moving body to a region in the candidate target region on the basis of the environment preference information of the region-adjusted moving body and the environment detection data in the candidate target region.

In operation 221, the degrees of priority in adjustment of the individual moving bodies can be compared with each other. For example, the degree of priority in adjustment of the moving body B is low, and the degree of priority in adjustment of the moving body A is high. In operation 221, the moving body B having a low degree of priority in adjustment is set as a region-fixed moving body, and the moving body A having a high degree of priority in adjustment is set as a region-adjusted moving body. That is, the region f calculated for the moving body B in operation 191 is not adjusted, and the region B calculated for the moving body A in operation 191 is adjusted.

In operation 222, the region other than the target movement region of the moving body B (region f) is set as a candidate target region of the region-adjusted moving body (moving body A).

In operation 223, the target movement region of the moving body A is specified in the region other than the region f (candidate target region). If it is determined that a problem of interference of the degree of comfort does not occur, the target movement region of the moving body A specified in operation 223 is specified as a final target movement region of the moving body A. Here, in the method of determining whether a problem of interference of the degree of comfort occurs in operation 223, one function related to effect information of each moving body with respect to an environment parameter is set, the function value changes in response to a change in the target movement region of the moving body, and thus it can be determined whether a problem of interference of the degree of comfort occurs, on the basis of a result of comparison between the function value and a preset threshold value.

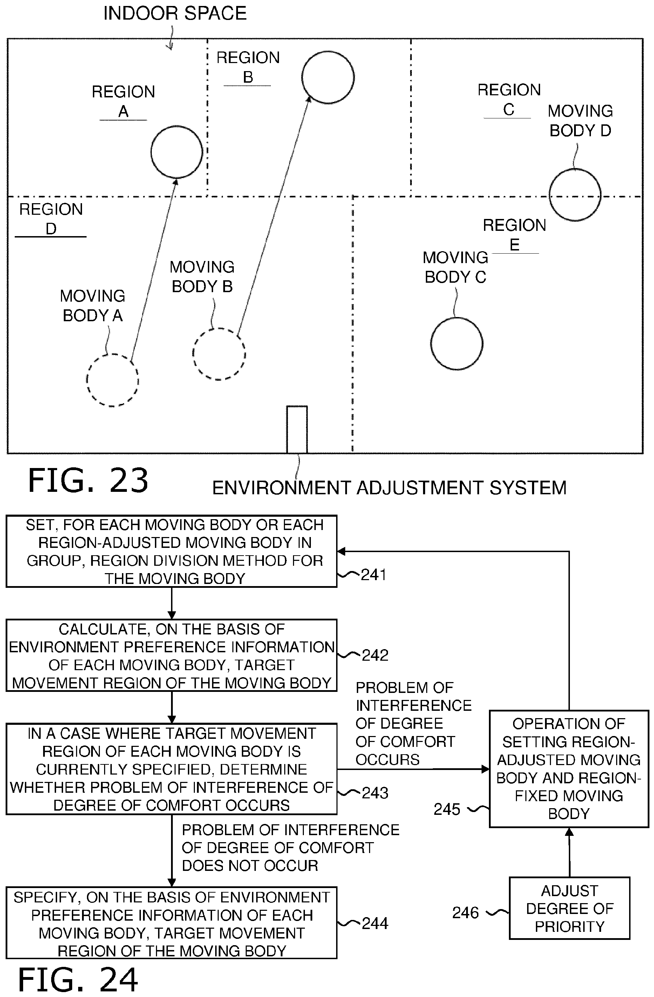

Fig. 23 is a schematic diagram of target movement regions of individual moving bodies finally specified after operation 192.

As illustrated in Fig. 23, the target movement region of the moving body B is the same as the region illustrated in Fig. 20. That is, the target movement region of the moving body B is not adjusted in operation 192. As illustrated in Fig. 23, the target movement region of the moving body A is the region A, which is different from the region B specified in Fig. 21. That is, the target movement region of the moving body A is adjusted in operation 192.

In at least one example, the degree of priority in adjustment of a moving body may be specified by a plurality of factors. For example, as the official position of the user of a moving body rises, the degree of priority in adjustment of the moving body decreases. That is, the target movement region is not easily adjusted. For example, as the degree of effect of the user of a moving body with respect to an environment parameter increases, the degree of priority in adjustment of the moving body increases. The degree of effect of the user of the moving body with respect to an environment parameter may be indicated by a certain numerical value.

Fig. 24 is a schematic diagram of a specific embodiment of a method of specifying a target movement region of each moving body in a group based on Fig. 19.

As illustrated in Fig. 24, the method includes:

operation 241 of setting, for each moving body or each region-adjusted moving body in a group, a region division method for the moving body, operation 241 performing a process on each moving body in an initial stage, operation 241 performing a process on each region-adjusted moving body specified in operation 245 in the following process;
operation 242 of calculating, on the basis of the environment preference information of each moving body, a target movement region of the moving body;
operation 243 of, in a case where the target movement region of each moving body is currently specified, determining whether a problem of interference of the degree of comfort occurs;
operation 244 of, in a case where it is determined in operation 243 that a problem of interference of the degree of comfort does not occur, outputting the target movement region currently specified for each moving body as a final result; and
operation 245 of, in a case where it is determined in operation 243 that a problem of interference of the degree of comfort occurs, with the necessity for adjusting an adjustment target movement region, setting each moving body as a region-adjusted moving body or a region-fixed moving body on the basis of the degree of priority in adjustment of the moving body, and for example, giving a low degree of priority in adjustment to the moving body whose target movement region has been determined, so as to set the moving body as a region-fixed moving body.

Fig. 24 may include operation 246 of adjusting the degree of priority in adjustment for each moving body.

Fig. 24 does not need to include operation 241. That is, a uniform region division method may be used for each moving body or each region-adjusted moving body in a group. **In** a case where operation 241 is not included, the method may start from operation 242, and a result of each region-adjusted moving body specified in operation 245 may be output to operation 242.

According to the third aspect of the example of the present disclosure, the environment matching server 4 is capable of, with two or more moving bodies that output environment matching trigger commands within a predetermined time period forming a group, specifying the target movement region of each moving body in the group, on the basis of the environment preference information of each moving body in the group and the effect information of each moving body in the group with respect to an environment parameter. Accordingly, mutual effects of the individual moving bodies can be avoided, and the individual moving bodies can reach appropriate target movement regions.

**In** each example of the present application, a function described in the first aspect of the example, a function described in the second aspect of the example, and a function described in the third aspect of the example may be combined. That is, the moving body control system is capable of implementing at least one of a function described in the first aspect of the example, a function described in the second aspect of the example, and a function described in the third aspect of the example.

The individual components of the moving body control system described by combining the examples of the present disclosure may be directly implemented by hardware, software modules executed by a processor, or a combination thereof. For example, one or more of the functional blocks illustrated in the drawings, and/or one or more combinations of the functional blocks can correspond to individual software modules in a process of a computer program, and can correspond to individual hardware modules. These software modules can correspond to respective steps illustrated in examples. These hardware modules can be implemented, for example, by fixing these software modules by using a field programmable gate array (FPGA).

The software modules may be located in a RAM memory, a flash memory, a ROM memory, an EPROM memory, an EEPROM memory, a register, a hard disk, a removable disc, a CD-ROM, or a storage memory of another form known in the industry. With one storage medium being coupled to a processor, the processor is capable of reading information from the storage medium and writing information on the storage medium. Alternatively, the storage medium may be a component of the processor. The processor and the storage medium may be located in an ASIC. The software modules may be stored in a memory of a mobile terminal or may be stored in a memory card insertable into the mobile terminal. For example, in a case where an electronic device adopts a large-capacity MEGA-SIM card or a large-capacity flash device, the software modules may be stored in the MEGA-SIM card or the large-capacity flash device.

One or more of the functional blocks illustrated in the drawings, and/or one or more combinations of the functional blocks may be implemented by a general-purpose processor, a digital signal processor (DSP), an application specific integrated circuit (ASIC), a field programmable gate array (FPGA), another programmable logic device, a discrete gate or a transistor logic, a discrete hardware component, or any appropriate combination thereof, for executing the functions described in the present disclosure. One or more of the functional blocks illustrated in the drawings, and/or one or more combinations of the functional blocks may be implemented as a combination of computer devices. For example, the implementation may be achieved by a combination of a DSP and a microprocessor, a plurality of microprocessors, one or more microprocessors combined with a DSP through communication, or any other disposition thereof.

The present disclosure has been described above with a combination of specific embodiments. It is to be understood by those skilled in the art that the description is merely an example and does not limit the scope to be protected of the present disclosure. Those skilled in the art are able to apply various modifications or changes to the present disclosure on the basis of the principle of the present disclosure. These modifications or changes are also within the scope of the present disclosure.

Reference Signs List

100    moving body control system
1    moving body
2    fixed environment sensor
3    moving environment sensor
4    environment matching server
5    environment adjustment system

Citation List

Patent Literature

[PTL 1] International Publication No. 2018/220903

**Claims**

1.    A moving body control system (100) comprising:

a moving body (1);
a fixed environment sensor (2) capable of obtaining first environment detection data in a fixed region in a predetermined space, the first environment detection data including detection data of at least one of humidity, temperature, illuminance, wind velocity, noise, and scent;
a moving environment sensor (3) capable of obtaining second environment detection data in a region in which the moving environment sensor (3) moves, the second environment detection data including detection data of at least one of humidity, temperature, illuminance, wind velocity, noise, and scent; and
a server (4) configured to create an environment information map on the basis of the first environment detection data and the second environment detection data, and control a movement of the moving body (1) on the basis of the environment information map,
wherein
the moving environment sensor (3) is provided separately from the moving body (1), and a movement route of the moving environment sensor (3) and a movement route of the moving body (1) are independent of each other,

**characterized in that**

the server (4) is configured to create, for the fixed region, the environment information map by using the first environment detection data, and create, for a region other than the fixed region in the predetermined space, the environment information map by using the second environment detection data; and

the server (4) is configured to use, in response to the moving environment sensor (3) obtaining the second environment detection data in the fixed region, the second environment detection data for the fixed region instead of the first environment detection data in the fixed region to create the environment information map.

**Patentansprüche**

1. Steuersystem für einen beweglichen Körper (100), das aufweist:

einen beweglichen Körper (1);

einen festen Umgebungssensor (2), der zum Erhalten von ersten Umgebungserfassungsdaten in einem festen Bereich in einem vorbestimmten Raum imstande ist, wobei die ersten Umgebungserfassungsdaten Erfassungsdaten der Feuchtigkeit und/oder der Temperatur und/oder der Beleuchtungsstärke und/oder der Windgeschwindigkeit und/oder eines Geräusches und/oder eines Geruchs enthalten;

einen beweglichen Umgebungssensor (3), der zum Erhalten von zweiten Umgebungserfassungsdaten in einem Bereich imstande ist, in dem sich der bewegliche Umgebungssensor (3) bewegt, wobei die zweiten Umgebungserfassungsdaten Erfassungsdaten der Feuchtigkeit und/oder der Temperatur und/oder der Beleuchtungsstärke und/oder der Windgeschwindigkeit und/oder eines Geräusches und/oder eines Geruchs enthalten; und

einen Server (4), der konfiguriert ist, eine Umgebungsinformationskarte auf der Grundlage der ersten Umgebungserfassungsdaten und der zweiten Umgebungserfassungsdaten zu erstellen und eine Bewegung des beweglichen Körpers (1) auf der Grundlage der Umgebungsinformationskarte zu steuern,

wobei

der bewegliche Umgebungssensor (3) getrennt von dem beweglichen Körper (1) vorgesehen ist, und eine Bewegungsroute des beweglichen Umgebungssensors (3) und eine Bewegungsroute des beweglichen Körpers (1) unabhängig voneinander sind,

**dadurch gekennzeichnet, dass**

der Server (4) konfiguriert ist, um für den festen Bereich die Umgebungsinformationskarte unter Verwendung der ersten Umgebungserfassungsdaten zu erzeugen und für einen anderen Bereich als den festen Bereich in dem vorbestimmten Raum die Umgebungsinformationskarte unter Verwendung der zweiten Umgebungserfassungsdaten zu erzeugen, und

der Server (4) konfiguriert ist, als Reaktion auf den beweglichen Umgebungssensor (3), der die zweiten Umgebungserfassungsdaten in dem festen Bereich erhält, die zweiten Umgebungserfassungsdaten für den festen Bereich anstelle der ersten Umgebungserfassungsdaten in dem festen Bereich zu verwenden, um die Umgebungsinformationskarte zu erzeugen.

**Revendications**

1. Système de commande d'un corps mobile (100), comprenant :

un corps mobile (1) ;

un capteur environnemental fixe (2) apte à obtenir de premières données de détection d'environnement dans une zone fixe d'un espace prédéterminé, lesdites premières données de détection d'environnement comprenant des données de détection d'humidité, et/ou de température, et/ou de luminosité, et/ou de vitesse du vent, et/ou de bruit et/ou d'odeur ;

un capteur environnemental mobile (3) apte à obtenir des deuxièmes données de détection d'environnement dans une zone où le capteur environnemental mobile (3) se déplace, lesdites deuxièmes données de détection d'environnement comprenant des données de détection d'humidité, et/ou de température, et/ou de luminosité, et/ou de vitesse du vent, et/ou de bruit et/ou d'odeur ; et

un serveur (4) configuré pour créer une carte d'informations environnementales sur la base des premières données de détection d'environnement et des deuxièmes données de détection d'environnement, et pour commander un déplacement du corps mobile (1) sur la base de la carte d'informations environnementales, où

le capteur environnemental mobile (3) est prévu séparément du corps mobile (1), et un itinéraire de déplacement du capteur environnemental mobile (3) et un itinéraire de déplacement du corps mobile (1) sont indépendants l'un de l'autre,

**caractérisé en ce que**

le serveur (4) est configuré pour créer, pour la zone fixe, la carte d'informations environnementales au moyen des premières données de détection d'environnement, et pour créer, pour une zone autre que la zone fixe dans l'espace prédéterminé, la carte d'informations environnementales au moyen des deuxièmes données de détection d'environnement ; et

le serveur (4) est configuré pour utiliser, en réaction à l'obtention par le capteur environnemental mobile (3) des deuxièmes données de détection d'environnement dans la zone fixe, les deuxièmes données de détection d'environnement pour la zone fixe au lieu des premières données de détection d'environnement dans la zone fixe, afin de créer la carte d'informations environnementales.

FIG. 1A

100

INDOOR
SPACE

FIG. 1B

INDOOR 100
SPACE

FIG. 2

INDOOR SPACE 100

FIG. 3

INDOOR SPACE 100

FIG. 4

INDOOR SPACE **100**

FIG. 5

ENVIRONMENT MATCHING SERVER 4 TRANSMITS INSTRUCTION OF MOVEMENT POSITION TO MOVING ENVIRONMENT SENSOR 3 — 61

MOVING ENVIRONMENT SENSOR 3 MOVES TO MOVEMENT POSITION ACCORDING TO OPERATION 61, OBTAINS SECOND ENVIRONMENT DETECTION DATA OF LOCATED REGION, AND TRANSMITS SECOND ENVIRONMENT DETECTION DATA TO ENVIRONMENT MATCHING SERVER 4 — 62

ENVIRONMENT MATCHING SERVER 4 RECEIVES SECOND ENVIRONMENT DETECTION DATA TRANSMITTED BY MOVING ENVIRONMENT SENSOR 3 AND FIRST ENVIRONMENT DETECTION DATA TRANSMITTED BY FIXED ENVIRONMENT SENSOR 2, AND GENERATES ENVIRONMENT INFORMATION MAP — 63

ENVIRONMENT MATCHING SERVER 4 RECEIVES ENVIRONMENT PREFERENCE INFORMATION OBTAINED BY MOVING BODY 1 — 64

ENVIRONMENT MATCHING SERVER 4 SPECIFIES REGION THAT MATCHES ENVIRONMENT PREFERENCE INFORMATION AS MOVEMENT TARGET REGION OF MOVING BODY 1 BY USING FIRST ENVIRONMENT DETECTION DATA AND SECOND ENVIRONMENT DETECTION DATA, AND TRANSMITS INFORMATION ON MOVEMENT TARGET REGION TO MOVING BODY 1 — 65

MOVING BODY 1 RECEIVES MOVEMENT TARGET REGION AND MOVES TO MOVEMENT TARGET REGION — 66

# FIG. 6

INDOOR SPACE

| REGION a | REGION b | REGION c |
|---|---|---|
| REGION d | REGION e | |
| REGION f | REGION g | REGION h | REGION i |
| REGION j | REGION k | REGION l | REGION m |
| | REGION n | | |

FIG. 7

INDOOR SPACE

| REGION (a) | |
|---|---|
| REGION (b) | REGION (c) |
| REGION (d) | REGION (e) |
| REGION (f) | REGION (g) |
| | REGION (h) | REGION (i) |

FIG. 8

INDOOR SPACE

REGION (A)

REGION (B)

REGION (C)

REGION (D)

1

REGION
(E)

REGION
(F)

REGION
(G)

REGION
(H)

90

## FIG. 9

INDOOR SPACE

92

1

## FIG. 10

INDOOR SPACE

REGION
(1)

REGION
(2)

REGION
(3)

REGION
(4)

REGION
(6)

REGION
(7)

REGION
(5)

1

REGION
(8)

REGION
(9)

REGION
(10)

FIG. 11

INDOOR SPACE

REGION
[8]

REGION
[2]

REGION
[1]

REGION
[7]

REGION
[6]

REGION
[5]

1

REGION
[3]

REGION
[4]

FIG. 12

CALCULATE OVERALL COMFORT DEGREE OF INDOOR SPACE ⟋140

CONTROL ENVIRONMENT ADJUSTMENT SYSTEM TO ADJUST ENVIRONMENT ⟋141

MOVING BODY CURRENT POSITION INFORMATION ⟋136

COMPREHENSIVE ENVIRONMENT DATABASE ⟋406

TRANSMIT ENVIRONMENT PREFERENCE INFORMATION ⟋132

CALCULATE REGION MATCHING ⟋134

SPECIFY CURRENT INDOOR SPACE DIVISION PLAN

DIVIDE SUPPORT INFORMATION ⟋139

PRESET REGION DIVISION TEMPLATE ⟋133

OBTAIN ENVIRONMENT PREFERENCE INFORMATION ⟋131

SPECIFY TARGET MOVEMENT REGION ⟋135

MOVING BODY MOVES TO TARGET MOVEMENT REGION ⟋137

MOVING ENVIRONMENT SENSOR OBTAINS FIRST ENVIRONMENT DETECTION DATA ⟋142

FIXED ENVIRONMENT SENSOR OBTAINS SECOND ENVIRONMENT DETECTION DATA

MOVING BODY REACHES TARGET MOVEMENT REGION ⟋138

# FIG. 13

ADJUST LENGTH OF PREDETERMINED TIME PERIOD

$T$   $T+\Delta t$   $T+2\Delta t$   $T+3\Delta t$   $T+3\Delta t+\Delta t'$

$\Delta t$   $\Delta t$   $\Delta t$   $\Delta t'$

# FIG. 14

INDOOR SPACE    MOVING BODY B    MOVING BODY D

REGION
e

REGION
MOVING  f
BODY C

REGION
a

REGION
b

REGION
c

REGION
d

MOVING
BODY A

## FIG. 15

ENVIRONMENT
ADJUSTMENT SYSTEM

FORMULATE EVALUATION FUNCTION OF THE GROUP ON
THE BASIS OF ENVIRONMENT PREFERENCE INFORMATION
OF EACH MOVING BODY IN THE GROUP AND EFFECT
INFORMATION OF EACH MOVING BODY IN THE GROUP
WITH RESPECT TO ENVIRONMENT PARAMETER

161

SPECIFY TARGET MOVEMENT REGION OF EACH MOVING
BODY IN THE GROUP ON THE BASIS OF EVALUATION
FUNCTION OF THE GROUP AND ENVIRONMENT DETECTION
DATA IN INDIVIDUAL REGIONS IN PREDETERMINED SPACE

162

## FIG. 16

INDOOR SPACE　　　　　　　　　　　MOVING BODY D

MOVING BODY B

REGION e

REGION f

MOVING BODY C

REGION a

REGION b

REGION c

REGION d

MOVING BODY A

## FIG. 17　ENVIRONMENT ADJUSTMENT SYSTEM

INDOOR SPACE

MOVING BODY B　　　　　　　MOVING BODY D

REGION (e)

REGION (f)

REGION (a)

REGION (b)

REGION (c)

REGION (d)

MOVING BODY A

MOVING BODY C

## FIG. 18　ENVIRONMENT ADJUSTMENT SYSTEM

SPECIFY TARGET MOVEMENT REGION OF EACH MOVING BODY IN THE GROUP ON THE BASIS OF ENVIRONMENT PREFERENCE INFORMATION OF EACH MOVING BODY AND ENVIRONMENT DETECTION DATA IN INDIVIDUAL REGIONS IN INDOOR SPACE ⟋191

ADJUST TARGET MOVEMENT REGION OF EACH MOVING BODY ON THE BASIS OF EFFECT INFORMATION OF EACH MOVING BODY IN THE GROUP WITH RESPECT TO ENVIRONMENT PARAMETER AND DEGREE OF PRIORITY IN ADJUSTMENT OF EACH MOVING BODY ⟋192

FIG. 19

INDOOR SPACE

REGION e

REGION f

MOVING BODY D

REGION a

REGION b

REGION c

REGION d

MOVING BODY A

MOVING BODY B

MOVING BODY C

ENVIRONMENT ADJUSTMENT SYSTEM

FIG. 20

33

INDOOR SPACE

REGION
A

REGION
B

REGION
C

MOVING
BODY D

REGION
D

REGION
E

MOVING
BODY B

MOVING BODY C

MOVING
BODY A

FIG. 21    ENVIRONMENT ADJUSTMENT SYSTEM

SET EACH MOVING BODY AS REGION-ADJUSTED MOVING BODY OR REGION-FIXED MOVING BODY ON THE BASIS OF DEGREE OF PRIORITY IN ADJUSTMENT OF THE MOVING BODY    ~221

SET REGION OTHER THAN TARGET MOVEMENT REGION OF REGION-FIXED MOVING BODY AS CANDIDATE TARGET REGION OF REGION-ADJUSTED MOVING BODY    ~222

ADJUST TARGET MOVEMENT REGION OF REGION-ADJUSTED MOVING BODY TO REGION IN CANDIDATE TARGET REGION ON THE BASIS OF ENVIRONMENT PREFERENCE INFORMATION OF REGION-ADJUSTED MOVING BODY AND ENVIRONMENT DETECTION DATA IN CANDIDATE TARGET REGION    ~223

FIG. 22

INDOOR SPACE

REGION B

REGION A

REGION C   MOVING BODY D

REGION D

REGION E

MOVING BODY A

MOVING BODY B

MOVING BODY C

**FIG. 23**   ENVIRONMENT ADJUSTMENT SYSTEM

SET, FOR EACH MOVING BODY OR EACH REGION-ADJUSTED MOVING BODY IN GROUP, REGION DIVISION METHOD FOR THE MOVING BODY ~241

CALCULATE, ON THE BASIS OF ENVIRONMENT PREFERENCE INFORMATION OF EACH MOVING BODY, TARGET MOVEMENT REGION OF THE MOVING BODY ~242

IN A CASE WHERE TARGET MOVEMENT REGION OF EACH MOVING BODY IS CURRENTLY SPECIFIED, DETERMINE WHETHER PROBLEM OF INTERFERENCE OF DEGREE OF COMFORT OCCURS ~243

PROBLEM OF INTERFERENCE OF DEGREE OF COMFORT OCCURS

PROBLEM OF INTERFERENCE OF DEGREE OF COMFORT DOES NOT OCCUR

OPERATION OF SETTING REGION-ADJUSTED MOVING BODY AND REGION-FIXED MOVING BODY

245 ~

SPECIFY, ON THE BASIS OF ENVIRONMENT PREFERENCE INFORMATION OF EACH MOVING BODY, TARGET MOVEMENT REGION OF THE MOVING BODY ~244

246 ~   ADJUST DEGREE OF PRIORITY

**FIG. 24**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018220903 A1
- US 2019091874 A1